# EUROPEAN PATENT SPECIFICATION

(11) **EP 2 874 077 B1**
(45) Date of publication and mention of the grant of the patent: **03.07.2019**
(21) Application number: 14192215.3
(22) Date of filing: 07.11.2014
(51) Int. Cl.: G06F 16/23, G06F 16/2455

(54) **Stateless database cache**
Zustandslose Datenbank-Cache
Mémoire cache de base de données sans état

(30) Priority: 07.11.2013 US 201314074047
(43) Date of publication of application: 20.05.2015
(73) Proprietor: SAP SE, 69190 Walldorf (DE)
(72) Inventor: Schiebeler, Dirk, 69190 Walldorf (DE)
(74) Representative: Richardt Patentanwälte PartG mbB

(56) References cited:
- "Using Oracle In-Memory Database Cache to Accelerate the Oracle Database", , 31 July 2009 (2009-07-31), XP055121333, Retrieved from the Internet: URL:http://www.oracle.com/technetwork/data base/performance/wp-imdb-cache-130299.pdf [retrieved on 2014-06-03]
- "CHAPTER 5: More SQL: Complexes Queries, Triggers, Views, and Schema Modification ED - Ramez Elmasri; Shamkant B Navathe (eds)", 1 January 2011 (2011-01-01), FUNDAMENTALS OF DATABASE SYSTEMS (SIXTH EDITION), ADDISON-WESLEY, PAGE(S) 115 - 143, XP009171303, ISBN: 978-0-13-608620-8 * page 124, last paragraph - page 125, paragraph 2; examples Q21, Q22 * * page 129, paragraph 3 - page 130, paragraph 2 *
- AGRAWAL S ET AL: "DBXplorer: a system for keyword-based search over relational databases", PROCEEDINGS 18TH. INTERNATIONAL CONFERENCE ON DATA ENGINEERING. (ICDE'2002). SAN JOSE, CA, FEB. 26 - MARCH 1, 2002; [INTERNATIONAL CONFERENCE ON DATA ENGINEERING. (ICDE)], LOS ALAMITOS, CA : IEEE COMP. SOC, US, vol. CONF. 18, 26 February 2002 (2002-02-26), pages 5-16, XP010588195, DOI: 10.1109/ICDE.2002.994693 ISBN: 978-0-7695-1531-1
- Anonymous: "Middleware - Wikipedia, the free encyclopedia", , 28 August 2012 (2012-08-28), XP055253837, Retrieved from the Internet: URL:https://en.wikipedia.org/w/index.php?t itle=Middleware&oldid=509651789 [retrieved on 2016-02-29]

## Description

### FIELD OF THE INVENTION

The invention relates to caching of databases; and, in particular, to a method for accessing data stored in a database.

### BACKGROUND

A content server, e.g., a database, may provide data to a requesting client, e.g., a web browser, via a data retrieval apparatus, e.g., middleware. Among performing other functions, the data retrieval apparatus may be configured to filter data retrieved from the content server and sent to the client, and cache data sent to the client for subsequent requests. Responsive to a client's request for data, the data retrieval apparatus may check whether the requested data had been previously requested by the same or a different requesting client and stored in a separate area of memory, e.g., cached. If the requested data had been previously cached, the data retrieval apparatus may return a copy of the cached data to the client, instead of retrieving data from the content server. Each data request from any client opens a new connection to the middleware, and upon resolution of the data request, the connection is terminated and resources, e.g., allocated memory, buffers, etc., are freed.

The interaction between the client and the server described herein may be realized in a Business Object Processing Framework (BOPF) in which interactions between the client and the server may be modeled by data objects (referred to hereafter as BO). The data objects may have associations and communication links to each other that facilitate data transactions and processes.

Internet document dated 31 July 2009 discloses a method for using oracle In-Memory Database Cache to Accelerate the Oracle Database.

### SUMMARY

It is an objective of embodiments of the invention to provide for a method for accessing data stored in a storage system, a computer program product and a gateway. Said objective is solved by the subject matter of the independent claims.

Advantageous embodiments are described in the dependent claims.

In one aspect, the invention relates to a computer implemented method for accessing data stored in a storage system comprised in a computer system as described in the independent claims.

The features of the independent claims may have the advantage of speeding up the data access process in the database compared to conventional methods that are constrained to a repetitive data access mode (e.g. a dataset requested in two different sessions at the portal application may be requested and returned twice from the storage system e.g. a database to the portal application) for previously access data.

The features of the independent claims may save resources in the computer system. For example, searching data in the cache may be less resources e.g. energy consuming compared to a same search performed on the database. Further, resources required for multiple data access request and return may be saved.

The data indicative of the dataset may for example comprise the dataset.

Another advantage may be that the present method may be seamlessly integrated in existing computer systems e.g. with reduced burden.

The storage system may comprise a database or any other computer-readable storage medium such as a DVD storage or from a file system.

The storage system has lower data access performance than the cache. Data access performance may comprise speed of the data access and/or Input/Output operations per time interval and/or a latency for each of the read operations. For example, the storage system (e.g. database, DVD storage or a hard disk) data access performance is low or much lower (e.g. slower) than the cache access.

According to one embodiment, the method further comprises: controlling the backend server to notify the data entity instance about a change in the dataset stored in the database; using the data entity instance to update the dataset in the cache upon receiving the notification.

This embodiment may have the advantage of providing a stateless cache such that the cache state (e.g. the data that the cache stores) and the storage system such as a database) state remain always the same. This may further save resources that would otherwise be required for getting up-to-date data that is stored in the storage system and not in the cache.

According to one embodiment, returning the data indicative of the dataset to the portal application comprises: returning in a first response a count of records of the dataset and returning in a second response at least part of the dataset.

For example, the dataset may be fully sent upon receiving a confirmation from the portal application in response to the reception of the count of records at the portal application.

In another example, the method further comprises receiving a second request from the portal application in response to retuning the first response, wherein the second request indicates the at least part of the dataset, wherein returning in the second response the at least part of the dataset.

The at least part of dataset may be determined or identified based on a display format of the graphical user interface of the portal application as explained below with reference to first and second set of records.

In a further example, the at least part of dataset may automatically be returned or sent after a predefined time period (e.g. 5min after returning the count of records) following the submission or the retuning of the count of records.

According to one embodiment, the dataset comprises at least one data table having multiple records, upon returning the first response receiving from the portal application a second data request, wherein the second data request indicates a first set of records of the multiple records and a predefined sorting criterion for sorting the first set of records, wherein returning the data indicative of the dataset comprises: sorting the multiple data records according to the sorting criterion and retuning the first set of records as sorted (e.g. returning the sorted first set of records).

The sorting of the multiple data records may be performed in the cache.
The sorting criterion may comprise for example at least one of an ID (e.g. name or number etc.) associated with each record, a size of each record, and a content of each record.

The first set of records may comprise a first maximum number of records that can be displayed on a single first display page of a graphical user interface of the portal application.

This may have the advantage of providing consistent data content to the portal application following e.g. the sorting criterion in particular for subsequent data requests of other records of the dataset as described by the following embodiment.

According to one embodiment, the method further comprises after returning the data indicative of the dataset receiving a third data request for accessing the dataset, wherein the third data request indicates a second set of records of the multiple records and the sorting criterion, retrieving the second set of records as sorted according to the sorting criterion from the cache, returning the second set of records as sorted.

The third data request may be received using another connection between the portal application and the gateway.

The second set of records may comprise a second maximum number of records that can be displayed on a second display page of the graphical user interface of the portal application, wherein the second display page follows immediately the first display page. For example, the dataset may be displayed on 10 display pages (ordered as display page 1 to display page 10) of the graphical user interface, wherein switching between different display pages of the 10 display pages may be performed using scrolling functions or other means allowing the switching from different display pages. The first and second display pages may for example be display page 1 and display page 2 of the 10 display pages respectively.

The first and second maximum numbers of records may or may not be the same.

For example, in a conventional method in case of a database comprising the multiple records (e.g. records 1-200) when requesting data records 100-110 (e.g. the second set of records), all the data records 1-110 will be retrieved and after that the records 100-110 may be selected from 1-110 in order to be returned. The present method may have the advantage of using the cache as the records 100-110 may be read or retrieved directly from the cache and may be returned to the portal application. This may save resources and reduce data traffic in the computer system.

Having all records of the dataset sorted in the cache may have the advantage that the second set of records may be returned in an order that takes into account (or in conformity with) the order of the first set of records i.e. this is in contrast to sorting every requested set of records separately. This may also save resources as the sorting may be performed at once instead of doing it for every set of records.

According to one embodiment, the at least one connection comprises two connections wherein the first and second responses are transmitted in respective connections.

According to one embodiment, returning the count of the records further comprises before returning the at least part of the dataset controlling based on the count a display function of the portal application for determining a paging format of a graphical user interface of the portal application for displaying the dataset and returning the dataset in accordance with the paging format.

According to one embodiment, returning the at least part of the dataset to the portal application comprises: splitting the dataset into one or more data portions corresponding to respective one or more display pages of the paging format, wherein a data portion comprises data of part of the dataset to be displayed on a display page of the one or more display pages at the portal application; sending the dataset data portion by data portion based on the page being displayed on the portal application.

For example, the data portions may be sent with a submission frequency (e.g. every 10 min one data portion is sent to the portal application), wherein the submission frequency is determined using a predefined display time of each display page of the one or more display pages (e.g. the display time may be 10 min for each display page of the one or more display pages). The predefined display time may for example be indicated in the data request and/or stored in the gateway.

These embodiments may increase the data transmission efficiency between the gateway and the portal application and maximally making use of an opened connection between the gateway and the portal application. For example, the submission of the count may determine the way the dataset may be submitted as described below.

According to one embodiment, the cache comprises a cluster table including buckets, the cluster table including: a client field representing a client with which data in a bucket of the cluster table is associated; a region identifier identifying at least one region in the cluster table that is readable or writable; a user identifier identifying a user with whom the cluster table is associated; an entity field identifying a middleware entity used to determine a structure of the data in the cluster table; a record counter for the at least one readable or writable region of the cluster table; a timestamp recording events; a line identifier identifying the size of the cluster table; a status identifier indicating an availability of the cache; and a cluster identifier identifying a length field for user data in the at least one readable or writable region.

According to one embodiment, the structure of the cache is determined by the data entity instance using the properties of the data entity.

According to one embodiment, the method further comprises refreshing the cache automatically or upon receiving a refresh request from the portal application.

According to one embodiment, the retrieving comprises searching the cache using a fuzzy search.

In another aspect, the invention relates to a computer program product comprising computer executable instructions to perform the method steps of the method of any one of the preceding embodiments.

In another aspect, the invention relates to a gateway for accessing data stored in a storage system comprised in a computer system, the storage system comprising one or more data tables, the computer system further comprising a backend server, wherein the backend server is operable to receive a data request from a stateless portal application via the gateway, the gateway comprising one or more gateway services associated with respective one or more data entities, wherein a data entity is defined by one or more properties, wherein a gateway service of the one or more gateway services comprises a class for accessing properties of a respective data entity, wherein the backend server comprises one or more data objects, wherein a data object of the one or more data objects has attributes that are defined by one or more fields of the one or more data tables, the computer system further comprising the method comprising a cache for storing requested data of the storage system in the cache. The gateway is configured for
- receiving the data request from the portal application, for accessing a dataset stored in the storage system, wherein the dataset is indicative of a data entity of the one or more data entities, the data request being received via at least one connection between the portal application and the gateway;
- selecting at least one gateway service from the one or more gateway services having at least part of the properties of the data entity;
- selecting at least one data object of the one or more data objects whose attributes match the at least part of properties of the selected gateway service;
- creating a data entity instance from the class of the gateway service and the selected data object;
- extracting search terms from the data request to a format interpretable by the storage system and the cache;
- in response to a determination that the dataset is not stored in the cache
   o retrieving by the data entity instance data indicative of the dataset from the storage system using the search terms and in parallel storing the dataset in the cache;
- retrieving using the search terms data indicative of the dataset from the cache using the data entity instance if the dataset is stored in the cache;
- returning the data indicative of the dataset to the portal application via the connection and closing the connection;
- maintaining the dataset in the storage system and the cache only.

In another aspect, the invention relates to a computer-implemented method of storing and outputting data in a cache, the method comprising: receiving, by a processor, a request for the data; extracting, by the processor, search terms from the request; mapping, by the processor, filter settings to a format recognizable by a storage system such as a database in which the data is stored; determining, by the processor, whether the data exists in the cache; responsive to a determination, by the processor, that the data exists in the cache, retrieving the data from the cache; responsive to a determination, by the processor, that the data does not exist in the cache, retrieving the data from the storage system and saving the data to the cache; and outputting, by the processor, the retrieved data based on the filter settings.

According to one embodiment, the request for data is made by a source user, and further comprises responsive to a determination, by the processor, that the source user is different from a current user, mapping a key table to a format recognizable by the storage system in which the data is located.

According to one embodiment, the method further comprises responsive to a determination by the processor that the requested data is in tabular form: performing, by the processor, count-call handling; and subsequent to the performance of the count-call handling, performing, by the processor, get-data handling.

According to one embodiment, the count-call handling includes: receiving, by the processor, the request for data, the request including a count of the tabular data; responsive to a determination, by the processor, that the requested data does not exist in the cache, saving the count to the cache; and constructing, by the processor, a response structure based on the count; wherein the count corresponds to at least one of: the number of rows and the number of entries in the tabular data.

According to one embodiment, the get-data handling includes receiving, by the processor, the request for data; responsive to a determination, by the processor, that the requested data does not exist in the cache, mapping sorting options to a format recognizable by the storage system, saving the requested data to the cache, and searching a response structure; and responsive to a determination, by the processor, that the requested data exists in the cache, using keys for data extraction from the cache and using selection parameters for filtering in the cache; and sorting, paging, and filling, by the processor, the response structure; wherein a format in which the retrieved data is output is as the response structure.

According to one embodiment, the count-call handling and the get-data handling are each called with a same query and the count-call handling is performed the first time the same query is made, and the get-data handling is performed subsequent times that the same query is made.
According to one embodiment, the selection parameters are based on the request for data.

According to one embodiment, the cache comprises a cluster table including buckets, the cluster table including: a client field representing a client with which data in a bucket of the cluster table is associated; a region identifier identifying at least one region in the cluster table that is readable or writable; a user identifier identifying a user with whom the cluster table is associated; an entity field identifying a middleware entity used to determine a structure of the data in the cluster table; a record counter for the at least one readable or writable region of the cluster table; a timestamp recording events; a line identifier identifying the size of the cluster table; a status identifier indicating an availability of the cache; and
a cluster identifier identifying a length field for user data in the at least one readable or writable region.

According to one embodiment, wherein the cache comprises a database table including a rawstring.
According to one embodiment, the method further comprises responsive to a determination, by the processor, to commit changes made to the cache in a current session, pushing, by the processor, the changes to all users.

According to one embodiment, the method further comprises responsive to a determination that the cache is unavailable, retrieving the data from the storage system .

In another aspect, a computer-implemented method for updating a cache. The method comprises receiving, by a processor, a command to update the cache; identifying, by the processor, a list of entities to be updated; retrieving, by the processor, updated entity instances; and writing, by the processor, the updated entity instances into the cache.

According to one embodiment, the method further comprises extracting, by the processor, corresponding node instances from a change object, wherein the change object includes at least one of: a business object, a business object node, a key, a change mode indicating types of changes to be made, and changed attributes.

According to one embodiment, the method further comprises determining, by the processor, that changes made during a session are to be committed; wherein the writing of the updated entity instances into the cache is performed responsive to a determination, by the processor, that the changes are to be committed.

According to one embodiment, the determination of committing changes is made by a business object processing framework transaction manager, the manager coordinating document changes made within one logic unit of work to related business objects.

In another aspect, a cache comprises: a client field representing a client with which data in a bucket of the cluster table is associated; a region identifier identifying at least one region in the cluster table that is readable or writable; a user identifier identifying a user with whom the cluster table is associated; an entity field identifying a middleware entity used to determine a structure of the data in the cluster table; a record counter for the at least one readable or writable region of the cluster table; a timestamp recording events; a line identifier identifying the size of the cluster table; a status identifier indicating an available of the cache; and a cluster identifier identifying a length field for user data in the at least one readable or writable region.

In another aspect, a computer-implemented method of updating a cache based on a query in a business object processing framework (BOPF). The method comprises: instantiating, by a processor, an entity data access client (DAC); mapping, by the processor, filter settings from a middleware format to a BOPF format; extracting, by the processor, at least one search term from the query; instantiating, by the processor, a BOPF service manager; setting defaults for paging; calculating navigation paths as follows: responsive to a determination that the query is initiated by a source entity: instantiating a source entity DAC; mapping a key table from the middleware format to the BOPF format; retrieving keys of a navigation target entity via the source entity DAC; responsive to a determination, by the processor, that no navigation paths are specified, mapping the key table from the middleware format to the BOPF format; responsive to a determination, by the processor, that data associated with the at least one search term is stored in the cache: retrieving the data from the cache based on the BOPF keys; filtering the cache based on BOPF selection parameters and the at least one search term; and sorting, paging, and filling a request response structure; responsive to a determination by the processor that the data associated with the at least one search term is not stored in the cache: mapping middleware sorting options into BOPF sorting options; retrieving data via the entity DAC; and searching, sorting, paging, and filling the request response structure.

According to one embodiment, the method further comprises responsive to a determination by the processor that the query is for table data, the table data including an associated count, and prior to the setting of defaults for paging: responsive to a determination, by the processor, that the count is stored in the cache, retrieving the count; responsive to a determination, by the processor, that the count is not stored in the cache: retrieving, by the processor, the count from the entity DAC; and saving, by the processor, the count from the entity in parallel with the retrieving of the count; and constructing, by the processor, the request response structure.

According to one embodiment, the method further comprises responsive to a determination by the processor that the query is for table data and prior to the setting of defaults for paging: responsive to a determination, by the processor, that the table data is stored in the cache: using keys for data extraction from the cache; using selection parameters and search strings for filtering in the cache; and sorting, paging, and filling the request response structure; responsive to a determination, by the processor, that the table data is not stored in the cache: mapping sorting options from the middleware format to the BOPF format; retrieving data via the entity DAC; and searching, sorting, paging, and filling the request response structure.

According to one embodiment, the method further comprises responsive to a determination, by the processor, to commit changes made to the cache in a current session, updating, by the BOPF service manager, all instances with the changes.

### BRIEF DESCRIPTION OF THE DRAWINGS

The accompanying drawings illustrate the various embodiments and, together with the description, further serve to explain the principles of the embodiments and to enable one skilled in the pertinent art to make and use the embodiments.
FIG. 1 is a flowchart illustrating a method of building and using a cache according to an example embodiment.
FIG. 2 is a flowchart illustrating a method of constructing a table based on table data availability in a cache according to an example embodiment.
FIG. 3 is a flowchart illustrating a method of retrieving data based on availability in a cache according to an example embodiment.
FIG. 4 is a flowchart illustrating a method of updating a cache according to an example embodiment.
FIG. 5 shows an architecture of a cache according to an example embodiment.
FIG. 6 is a block diagram of a system in which a method of building and using a cache can be implemented according to an example embodiment.
FIG. 7 is a block diagram of a user interface implementing methods and systems described herein and according to an example embodiment.
FIG. 8 is a block diagram of a system implementing methods and systems described herein and according to an example embodiment.
FIG. 9 is a flowchart illustrating a method of committing changes according to an example embodiment.
FIG. 10 is a block diagram of a Business Object Processing Framework (BOPF) architecture according to an example embodiment.
FIG. 11 is a flowchart illustrating a method of instantiating a source entity data access client (DAC) according to an example embodiment.
FIG. 12 is a flowchart of a method for accessing a dataset in a storage system.

### DETAILED DESCRIPTION

Accessing data from a storage system (e.g., a database) is typically a time-consuming function, a challenge that is compounded by complex queries for the data. In the context of software that enables multiple users to make a transaction by means of middleware, timing is a factor in usability, because real-time or near real-time updates to data accessible, editable, and/or viewable by the multiple users will affect decision-making regarding the transaction. The middleware may be a gateway and/or server. One example software that facilitates transactions is the SAP Transportation Management application, which forms a part of the SAP Supply Chain Management (SCM) software. A source system may access the SAP Transportation Management application via a portal and middleware. For example, the source system may request or edit data of the application. Each data request may open a connection to the middleware that in turn accesses the back-end, selects and calculates data, and returns the requested data to the source system. Upon completion of relaying the requested data to the source system, the connection is terminated, and all resources, including allocated memory and buffers are freed (e.g., cleared).

The query to the application may be a complex instruction including selecting, sorting, calculating, and/or requesting attributes. For example, in the context of a data transaction between a source system and a target system, the query may include address details, routing information, data requests, and/or measurement details . The various source systems using the application may submit data in the form of queries to the application, which queries update the content of a back-end (e.g., a database) linked to the application. Source and target systems may view the updated data by querying the application to return requested data from the storage system. The data requested by a query may be located in separate data tables, and various helper methods may be called to access the data or perform calculations. Thus, the complexity of a single query may result in long response times, for example, more than 15 seconds. Furthermore, because the portal is stateless and a connection is opened and closed with each query, a single query requires a roundtrip to the storage system
An unstructured cache may be provided in such a system to improve response times. Runtime performance may be improved by caching, because storing data or a copy of data in a more accessible location increases the speed of interactions between a content server and a data access client, e.g. reading from and writing to the content server, paging, sorting, searching, and filtering. Once a request has been made, subsequent requests are much faster, because storing data in the cache eliminates complex selection logic for the storage system. In an embodiment, the cache is structured to comprise a cluster table, which is further described herein. In another embodiment, the cache is structured as a database table, which is also further described herein.

Because caches are typically cleared with the closing of a connection, for instances in which connections are frequently opened and closed, the application is prevented from taking advantage of the benefits of caching. Thus, a stateless cache, that is, a cache that is in the same state as its corresponding database retains the benefits of improved speed, even if connections are frequently opened and closed, because each new data request may access the cache, which is retained through multiple data requests. In the context of a BOPF system, the cache may be included into a BOPF transaction manager. The BOPF transaction manager manages all changes that occur during a transaction, e.g. a SAP Transportation Management transaction. Thus, upon saving a transaction, relevant changes for the cache may be identified and updated for changed instances. In an embodiment, the cache is updated on-the-fly, at the same time that changes to the database are saved via the BOPF. For example, the cache may improve response time to less than one second compared with 15 seconds without the cache.

### Integration of the stateless cache with middleware

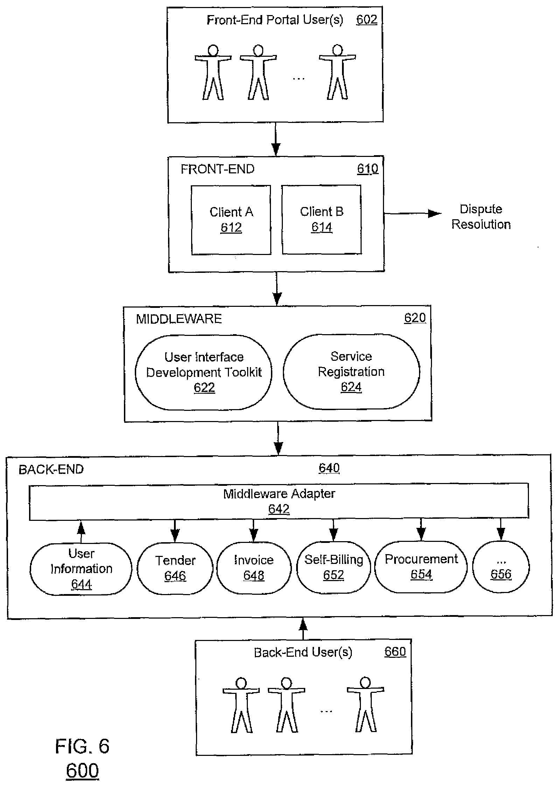

The stateless cache described herein may be integrated with middleware in a system, so that the cache may be accessed and edited by various users. FIG. 6 is a simplified block diagram of a system 600 in which a method of building and using a cache may be implemented according to an example embodiment. In the context of an SAP Transportation Management collaboration portal, the caching may be performed by middleware, which middleware interfaces with a front-end and back-end as described herein. The middleware may function as an adapter mapping and/or converting data between various formats. One advantage of interacting with the middleware is that even if developers are only familiar with a limited number of data formats, they may still be able to work with data in the back-end, because the middleware converts between different data formats. The middleware may then perform caching functions based on commands from a developer.

The system 600 may include a front-end platform 610 ("front-end" for simplicity), a back-end platform 640 ("back-end" for simplicity), and middleware 620. The system 600 may also include front-end user(s) 602 and back-end user(s) 660, who respectively access the front-end 610 and back-end 640. The direction in which data is transmitted is represented by the direction of arrows shown in FIG. 6. Although shown in a single direction representing the primary direction of data flow, communications between the various blocks may be also be bi-directional. For example, back-end user(s) 660 interact with back-end 640, for example, by issuing commands to the back-end, but the back-end 640 may also provide information, e.g., requested data, to the back-end user(s) 660 as well.

The front-end 610 may include various clients 612 and 614. These clients may be desktop browsers, tablet browsers, etc. The front-end 610 may function as a portal in which front-end users 602 may access and edit back-end data. The middleware 620 may function as a gateway and/or interface between the front-end 610 and back-end 640. The middleware 620 may include a user interface (Ul) development toolkit 622. The UI development toolkit may be for HTML5 (SAPU15). The UI development toolkit may also involve Business Server Pages (BSP). For example, BSP may integrate dynamic web pages into the backend, anchor SAPUI5 sources, and be used for other support and maintenance functions. The middleware 620 may also include service registration 624, which may facilitate a data transaction between front-end user(s) 602 and back-end user(s) 660. The back-end 640 may be an SAP TRANSACTION MANAGER. The back-end 640 may include a middleware adapter 642. The middleware adapter 642 may be provided with user information 644 from back-end user(s) 660. The middleware adapter 642 may further provide data regarding tender 646 and invoice 648, invoice self-billing 652, strategic freight procurement 654, and additional functionalities 656 such as forwarding order creation via portal 602.

In operation, front-end user(s) 602 may engage in various data transaction functions with the front-end 610. These functions may include accepting an Request for Quotation (RFQ), rejecting an RFQ with or without changes, accepting invoice, starting dispute resolution processes, and creating an invoice. The front-end 610 may retrieve UI sources from the middleware 620, get other data, and create quotations.

The front-end may also proceed to dispute resolution, for example with SAP Jam. The middleware 620 may request data and creation of quotations from the back-end 640. The Back-end User(s) 660 may provide and/or manipulate data to the back-end 640.

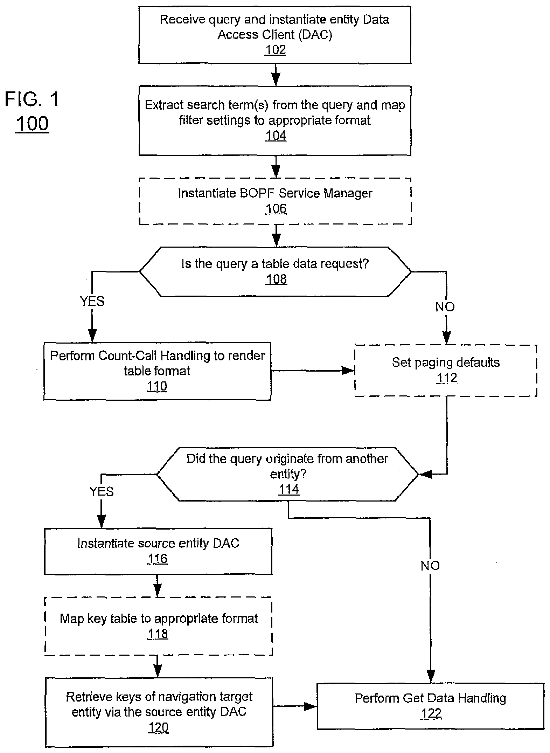

FIG. 1 is a flowchart illustrating a method 100 of building and using a cache according to an example embodiment. In step 102, the method 100 may receive a query, and responsive to the query, instantiate an entity Data Access Client (DAC). The entity DAC may be specific to a particular entity, for example the entity that called the method 100. In a step 104, search term(s) may be extracted from the query received in step 102, if the query includes search terms. In one embodiment, the search may be performed as a fuzzy search, where all of the data in an entity is searched for a match to the search term. For example, if "main" is an extracted search term from a query, the search may return documents containing "main" somewhere within the documents, including documents referring to "Main Street," "Main River in Frankfurt," "main stage of transportation," etc. The search may also convert codes into corresponding description in different languages such as the language with which a user is logged into the system. The search may search descriptions rather than technical codes. This may be advantageous because a user typically interacts with the system using descriptions instead of technical codes. In another embodiment, a system may include a black list of technical fields, which black list may be predetermined and/or modified based on interactions with a user. If a search term is in the black list, the search term is not searched or excluded from a fuzzy search. For example, the black list may include technical fields such as Globally Unique Identifiers (GUIDs) and other technical values that are not displayed on the UI.

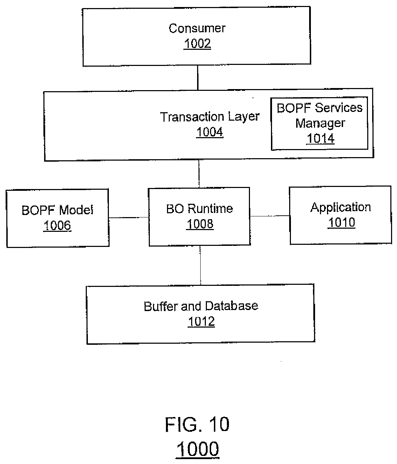

If multiple formats are involved, then filter settings may be mapped and/or converted to an appropriate format. For example, in the context of SAP BOPF, filter settings may be mapped from the middleware format to the BOPF format. Optional step 106 may be performed by the method 100, if operating in the context of BOPF. In optional step 106, a BOPF Service Manager is instantiated. For example, the BOPF Service Manager may be instantiated in a transaction layer of BOPF architecture as described herein relation to FIG. 10. For example, in ABAP coding, if a BOPF Service Manager is requested for the first time within a transaction, a service manager for a BO may be requested from a BOPF via a service manager factory. If a BOPF Service Manager has been previously requested, i.e., the BOPF transaction manager is already available, then the new service manager instance is registered at the transaction manager. If a service manager is already registered for the requested BO, the registered service manager may be returned as the BOPF Service Manager.

FIG. 10 is a block diagram of a Business Object Processing Framework (BOPF) architecture 1000 according to an example embodiment. The architecture 1000 may include a consumer 1002, a transaction layer 1004, a BOPF Model 1006, a BO Runtime 1008, an application 1010, and a buffer and database 1012. The consumer layer 1002 may use services provided by the transaction layer 1004 to access BO instances and to control transactions. The transaction layer 1004 may include a central transaction manager instance, e.g., BOPF Services Manager Instance 1014 that may allow a consumer to save all changed BO instances of a current transaction. The BOPF Service Manager Instance 1014 for each BO may provide services to access all BO object instances of each BO. Such services may include reading data from BO instances. For example, in step 106 of method 100, the BOPF Service Manager 1014 may be instantiated. The BOPF Model 1006 may store and organize data regarding each modeled BO. The BO Runtime 1008 may execute the requested services and instantiate and invoke the application 1010, which may implement classes of entities of a BO. After an action has been executed, BOPF may return the result to the consumer 1002. The buffer and database 1012 may provide space for BOs to autonomously buffer database accesses and manage transactional changes. However, the buffer and database 1012 is not to be confused with the cache, differing, for example, in that the buffer is freed at the end of each connection as described herein.

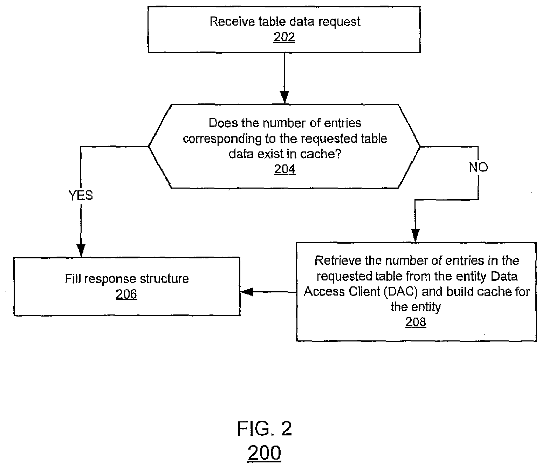

The method 100 may then proceed to step 108, in which the method 100 determines whether the query received in step 102 is a request for a particular data format such as data in tabular form ("table data"). If the request is for table data, the method 100 proceeds to step 110 before step 112, in which a count-call method or sub-routine may be called to render the formatting for the table. For example, the count may correspond to the number of entries or number of rows in the table data, and the count-call constructs the table prior to populating it with data. The count-call handling is further described herein in relation to FIG. 2. If, in step 108 it is determined that the query is not a table data request, or upon completion of step 110, the method 100 proceeds to optional step 112. In step 112, if desired, commanded, or necessary, paging defaults may be set. For example, paging may determine how much data is displayed on a UI at once. Paging defaults may represent how much data is viewable on a single page or represent how a corpus of data is split over multiple pages, a subset of which is viewable at a single time by a user.

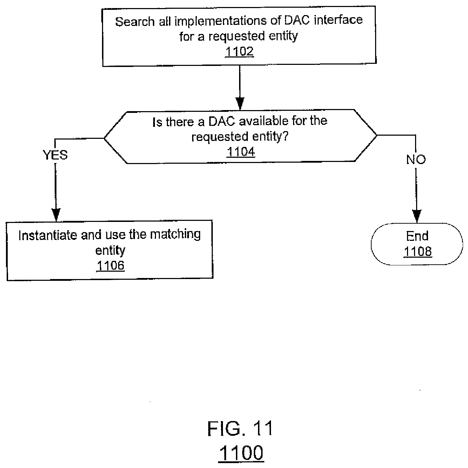

In step 114, the method 100 determines whether the query received in step 102 originated from another entity. For example, it may be the case that the query did not originate with the entity that called the method 100 but rather with another entity ("source entity"), and the query was then relayed by the current entity. If the query originated from another entity, the method 100 then proceeds to check navigation paths. Navigation paths may be provided by the middleware, and may be derived from the middleware metadata. For example, navigation paths may be provided by a gateway, which navigation paths may be derived from gateway service metadata. Checking navigation paths may include steps 116, 118, and 120. In step 116, the method 100 may instantiate a source entity DAC, and is further described herein in relation to FIG. 11.

FIG. 11 is a flowchart illustrating a method 1100 of instantiating a source entity DAC according to an example embodiment. In an embodiment, a DAC is associated with every entity that is handled by a middleware service manager. Each DAC may be associated with a middleware service and an entity. For example, the middleware service and entity to which a DAC belongs may be stored in a class of the DAC as static public member variables. The method 1100 may be performed by the middleware service manager. In step 1102, the method 1100 may check all implementations of a DAC interface for a requested entity. In step 1104, the method 1100 may determine whether a DAC is available for the requested entity. For example, the entity requested by method 100 in step 116 may be a source entity. If a DAC is determined to be available in step 1104, the method 1100 instantiates and uses the matching entity in step 1106. However, if no DAC is available for the requested entity, the processing of the data request may be canceled, and an exception generating a message may be displayed on a UI in step 1108. The error message displayed may include information regarding a current service with which the data request is performed and a name of the entity for which no DAC is found such that a user receiving the message may appropriately inform implementers of the missing implementation. Steps 1102 and 1104 may be performed more quickly than conventional methods, because the entity information (for example, the static public variables) provides information regarding the DAC classes without instantiating all available DACs. Upon completion of steps 1106 or 1108, the method 1100 may return to step 118 or step 120 of method 100.

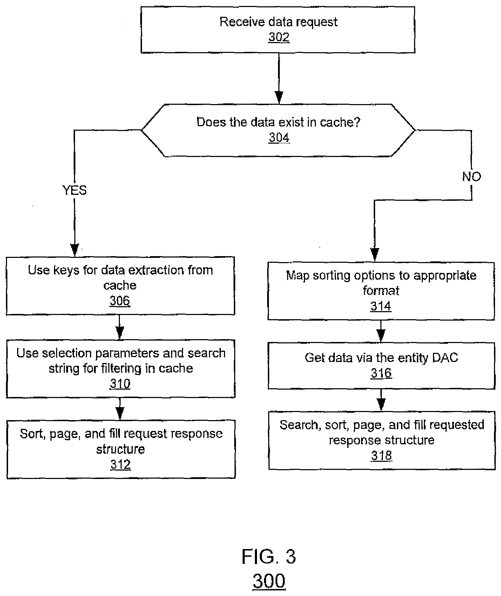

Optional step 118, in which a key table is mapped to an appropriate form, may then be performed by the method 100, if multiple formats are involved. In step 120, keys of a navigation target entity are retrieved using the source entity DAC. Upon completion of step 120 or responsive to a determination in step 114 that the query did not originate from an entity other than the one initiating the method 100, the method 100 proceeds to step 122. In step 122, the method 100 retrieves data from a cache. The steps involved in data retrieval from the cache may be performed as additional steps in method 100 or as a sub-routine and is further described herein in relation to FIG. 3.

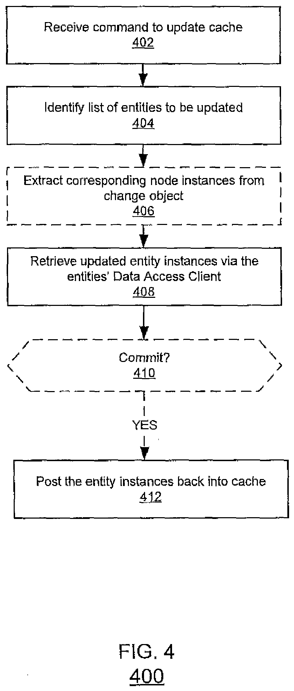

FIG. 2 is a flowchart illustrating a method 200 of formatting a table based on table data availability in a cache according to an example embodiment. The method 200 may be called by method 100 to retrieve information for formatting a table, for example the number of rows and columns. In step 202, the method 200 receives a request for table data, which request may be based on the query received and/or parsed in steps 102 and/or 104 of the method 100. In step 204, the method 200 determines whether there has been a cache hit, i.e., the count or the number of entries corresponding to the table data requested in step 202, exists in cache. If there is a cache hit, then the method 200 proceeds to step 206, in which a response structure is constructed. That is, for the case of table data, the filling of the request response may be constructing the skeleton of the response structure. Otherwise, if there is a cache miss in step 204, the method 200 proceeds to step 208. In step 208, the count is retrieved from the back-end, for example, the number of entries in the requested table is retrieved from the entity DAC. In step 208, the cache may also be built for the entity. Methods for building cache are further described herein, e.g., in relation to FIG. 4. Upon completion of method 200, execution may continue in method 100, for example continuing in step 112 or step 114.

FIG. 3 is a flowchart illustrating a method 300 of retrieving data based on availability in a cache according to an example embodiment. In step 302, the method 300 receives a data request. Similar to method 200, the data request may be based on the query received and/or parsed in steps 102 and/or 104 of method 100. For the case of table data, the data request may be the same request as that received in step 202 of method 200. For example, the first time the request is made, method 200 may be called, while for subsequent requests, method 300 may be called. That is, the request may be the same each time it is made, but different methods may be invoked based on whether or how many times the request was previously made. In step 304, the method 300 determines whether the data exists in cache. If there is a cache hit in step 304, then the method 300 proceeds to extract the table data from the cache in steps 306 to 312. In step 306, the method 300 uses keys for data extraction from the cache. In a BOPF context, the keys may be BOPF keys. In step 310, the method 300 uses selection parameters and a search string for filtering in the cache. In a BOPF context, the selection parameters may be BOPF parameters. The selection parameters and/or search string may be based on the query and/or search term(s) extracted in step 104 of method 100. In step 312, the method 300 sorts, pages, and fills the response structure. For the case of table data, a skeleton of the response structure (e.g., a table) may already be constructed and/or formatted by count-call handling, described herein, e.g., with respect to FIG. 2. That is, for the case of table data, the sorting, paging, and filling of the request response may be filling the skeleton of the response structure. In step 304, if there is a cache miss, the method 300 proceeds to step 314. In step 314, sorting options are mapped to an appropriate format. In the context of BOPF, middleware sorting options may be mapped into BOPF sorting options. In step 316, the method 300 retrieves the data requested in step 302 via the entity DAC. Upon retrieval of the data in step 316, the method 300 proceeds to step 318, in which the requested response structure may be searched, sorted, paged, and filled.

FIG. 4 is a flowchart illustrating a method 400 of updating a cache according to an example embodiment. The cache may be updated after changes are made in a back-end, so that all users may view up-to-date information. In step 402, the method 400 may receive a command to update the cache. In the context of BOPF, the method 400 may also receive a corresponding BOPF change object from which cache instances that have been changed and need to be updated may be derived. The BOPF change object may be a repository for changes made in a transaction. BO nodes may be mapped to middleware entities by being declared in a DAC. In step 404, a list of entities to be updated may be identified, for example based on the BO nodes mapped to the entities. Method 400 may be performed for each changed node key, where a node key identifies a BO node. In step 404, the list of entities to be updated may be returned if a current node has been changed. In the context of BOPF, in optional step 406, corresponding node instances are extracted from the change object. For example, the middleware may extract corresponding node instances from the change object, which corresponding node instances may be used to retrieve updated entity instances by getting data from the entities' DAC in step 408. The data may be retrieved from the entities' DAC according the method 300. In step 412, the entity instances may be extracted, updated, and posted back in the cache based on the retrieved data.

For the case of BOPF, an optional commit step 410 may be performed subsequent to step 408 and prior to step 412. For example, a BOPF TRANSACTION MANAGER may coordinate and/or supervise posting all relevant changes via involved BO Service Managers, including document changes, made within one Logical Unit of Work (LUW) to related BOs so that the posting is conducted in a correct and consistent sequence. This insures that all changes are handled correctly, and that the BO instances are consistent and in a valid state after the changes. One way in which changes are posted may be through a commit/roll process. In a commit/roll process, either all or none of the changes may be posted. At the end of a mechanism, but before posting to a database, the caching methods discussed herein may be performed. That is, the cache update may be registered upon a determination to commit in step 410, in which based method 400 proceeds to step 412. However, if the changes are rolled back, the cache is not updated and remains as it was.

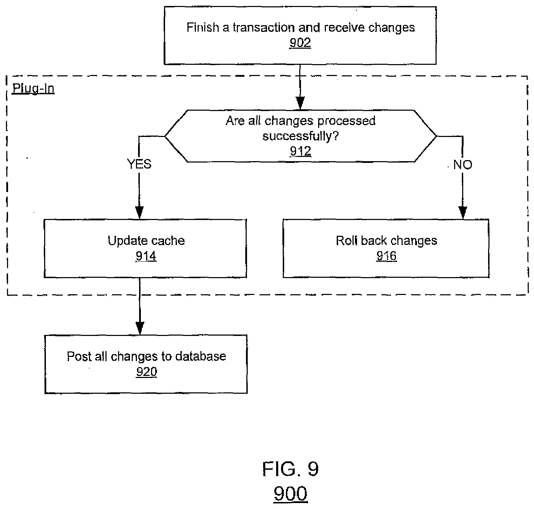

FIG. 9 is a flowchart illustrating a method 900 of committing changes according to an example embodiment. In step 902, a transaction may be completed and method 900 may receive changes made during the transaction. For example, during cache update registration, the list of changes of the BOPF transaction may be provided as an input. In step 912, method 900 may determine whether all changes are processed successfully, for example, no errors occurred and/or runtime results match expected results. If all changes are processed successfully, in step 914, the changes may be committed, i.e., the cache may be updated, for example according to the methods described herein. The method 900 may also proceed to step 920, in which all changes are posted to a storage system such as a database 920. If not all the changes are successful, for example, at least one error occurred, in step 416, the changes may be rejected and not be permanently saved, i.e., the changes may be rolled back. The update, for example steps 912, 916, and 916, may be implemented as a plug-in mechanism executed at the end of a transaction.

### Architecture of the cache

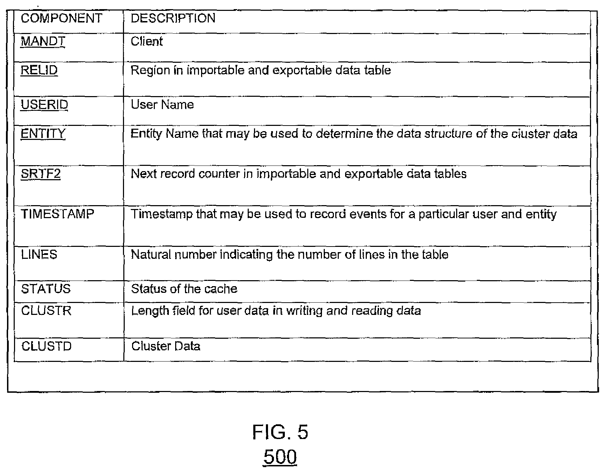

FIG. 5 shows an architecture of a cache 500 according to an example embodiment. The cache 500 may comprise a cluster table which may store data. The cluster table may comprise one or more buckets. A bucket may be defined by a maximum number of bytes it contains, e.g., 32kB. The number of buckets in a cache or storable by a user may be predefined. Alternatively, buckets may be added when necessary without limit. The cluster table may be supported by SAP NETWEAVER and may be manipulated by Advanced Business Application Programming (ABAP) commands.

Each bucket (alternatively, "data table") may contain data organized according to example components (i.e., variables or identifiers) shown in FIG. 5. MANDT may refer to a client with which the data in the bucket is associated. In an alternative embodiment, for monolithic programs that are installed once and just for a single client, the MANDT field may be omitted. RELID may refer to region(s) in the data table that is readable or writable. USERID may identify a user name. ENTITY may identify the name of a middleware entity, and may be used to identify or determine a data structure of the cluster data. SRTF2 may refer to a bucket counter in readable and writable data tables. For example, the bucket counter may identify the sequence of buckets within the cluster table by numbering each bucket. TIMESTAMP may record relevant events, for example in UTC long form. Relevant events include, but are not limited to, a last time of update for a particular user and entity. LINES may indicate the size of a data table, for example the number of rows in the table. STATUS may indicate the status of a cache, such as whether or not the cache is ready. For example, while the cache is being built up for the first time or after an invalidation of the cache, the cache may be unavailable, which may be signified by the STATUS. If a cache is unavailable, data may be fetched directly from a database instead as further described herein. Once a cache becomes available, the STATUS identifier may be changed to signify that the cache is available. CLUSTR may refer to a length field for user data in readable and writeable region(s) of a data table. CLUSTD may refer to cluster data.

In an alternative embodiment, the cache may be implemented as a database table with attributes. The database table may include attributes similar to the ones described above for cluster tables. CLUSTR may be replaced with a RAWSTRING of unlimited length. The attributes of the database table may include CLIENT, SERVICE, ENTITY, USERID, STATUS, TIMESTAMP, LINES, and DATA having similar properties to the attributes described above in relation to cluster tables unless otherwise specified herein.

Middleware may use various methods to read and write to the cache 500. For example, a read method may extract a single instance or a set of instances meeting a criterion. Determination of whether one or more instances meet a criterion may be by filter select options, fuzzy search string, or other data search and processing methods.

A build method, further described herein, may add data to a cache, or if the data already exists in the cache, may overwrite corresponding data. If a cluster table is used in the cache, the build method may also populate associated components, for example, identifying the user whose query caused the extraction of data and parallel building of cache.

An update cache method, also further described herein, may be called for an entity and/or a user. The update cache method may be provided with an object or other indicator containing notification for created, deleted, or updates instances. That is, for example, in the context of BOPF, a BOPF change object containing BOPF notifications for created, deleted, or updated BO instances may be provided to the update cache method. The update cache method may extract keys of changed instances from the change object, and use the keys to extract a state of the instances from a back-end containing data. Thereafter, deleted and updated instances may be removed from the cache, and updated and created instances may be inserted into the cache. Removal and/or insertion of deleted and updated instances may be by means of the build cache method described herein.

An invalidate cache method, also further described herein, may delete instances from the cache responsive to a command, which command may be by a particular user. A single instance, a subset of instances, or all instances of an entity may be removed from the cache. The removal operations may be performed directly on database table(s) with program-specific methods or standard Structured Query Language (SQL) commands. The invalidate method may be called from the User Interface Development Toolkit 622. In an embodiment, a refresh button may be provided in the toolbar of every collaboration portal user interface. Selection of the refresh button may dispatch a command to perform the invalidate cache method. Upon clearing the cache content, the cache may be built anew. The invalidate cache method provides some redundancy with the update cache, and may refresh the cache should any updates hang or any other processes proceed not as expected.

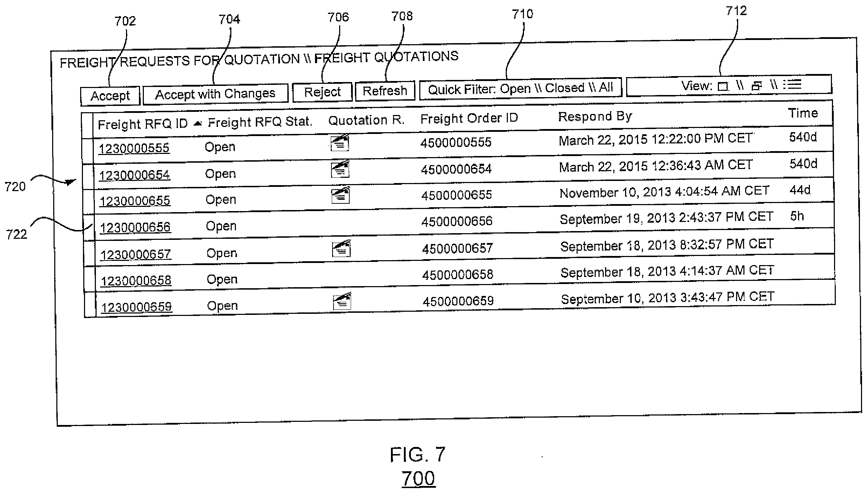

FIG. 7 is a block diagram of a UI 700 implementing methods and systems described herein and according to an example embodiment. A front-end user may interact with the system 600 via UI 700. A back-end user may interact with the system 600 via a similar UI. UI 700 includes exemplary buttons 702, 704, 706, 708, 710, and 712, which, when selected, send commands to the back-end to perform various functions described herein. UI 700 may also include a viewing area 720, which may include selectable elements 722, which may display additional information regarding a particular set of data. The viewing area 720 may display data from a database and/or calculations performed on the data in an organized manner. For example, the viewing area 720 may display information from a cluster table. The TIMESTAMP may be displayed as a "Respond By" date for a particular entry. For example, for the entry corresponding to Freight RFQ ID 1230000656, the TIMESTAMP is September 19, 2013 at 2:43:37 PM CET. The data in viewing area 720 may be organized, filtered, and/or refreshed by selecting buttons 702 to 712. For example, the "Quick Filter" button 710, may include options such as displaying open orders, closed orders, or all orders. Selection of closed orders, for example, may send a query to the method 100, which would retrieve the requested data from cache and/or the back-end. Selection of the "Refresh" button 708 may send a command to run the invalidate cache method described herein. In relation to runtime performance, the methods described herein may improve the speed of displaying data in the viewing pane 720, because a command made via selection of buttons and/or elements on UI 700 may trigger the methods described herein causing retrieval from and/or performance of stateless cache.

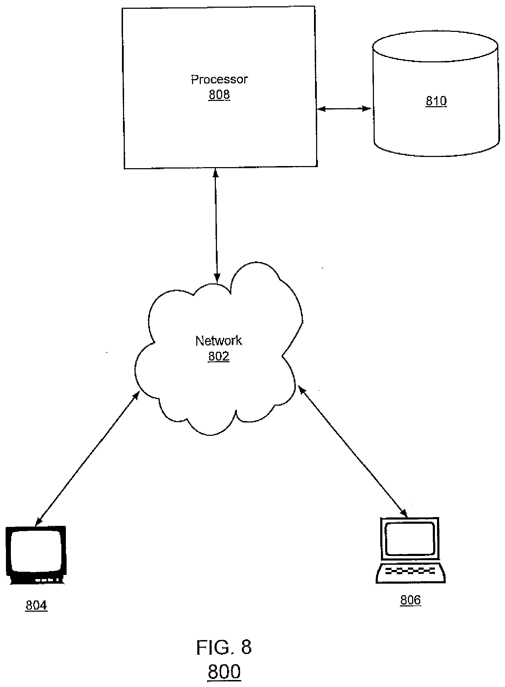

It should be also appreciated that the present invention can be implemented in numerous ways, including as a process, an apparatus, a system, a computer processor executing software instructions, or a computer readable medium such as a computer readable storage medium or a computer network wherein program instructions are sent over optical or electronic communication or non-transitory links. For example, FIG. 8 shows an example system 800 that includes a processor 808 in communication with a computer-readable medium 810. The computer-readable medium 810 may include instructions executable by the processor 808, such that, when the processor 808 executes various portions of the instructions, the instructions cause the processor 808 to perform the various methods described herein. It should be noted that the order of the steps of disclosed processes may be altered within the scope of the invention, as noted in the appended Claims and in the description herein. The example system further includes terminals 804 and 806. For example, one terminal 804 may be used by a front-end user to interact with system 800, and the other terminal 806 may be used by a back-end user to interact with the system 800. The processor 808 and clients 804 and 806 may be in communication via network 802, which may be the Internet. Each of the clients 804 and 806 may access the processor 808 and any applications stored thereon via the network 802.

Although the foregoing invention has been described in some detail for purposes of clarity of understanding, it will be apparent that certain changes and modifications may be practiced within the scope of the appended claims. The present invention may be practiced according to the claims without some or all of these specific details. For the purpose of clarity, technical material that is known in the technical fields related to the invention has not been described in detail so that the present invention is not unnecessarily obscured. It should be noted that there are many alternative ways of implementing both the process and apparatus of the present invention. Accordingly, the present embodiments are to be considered as illustrative and not restrictive, and the invention is not to be limited to the details given herein, but may be modified within the scope and equivalents of the appended claims.

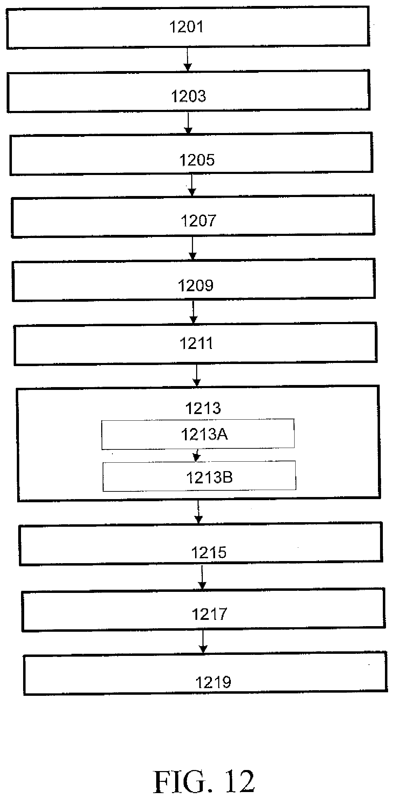

FIG. 12 is a flowchart of a method for accessing data stored in a storage system such as a database (e.g. database 1012 of FIG. 10) comprised in a computer system (e.g. such as system 600 of FIG. 6). In the following, the database is used as an example of the storage system.

The database comprises one or more data tables and/or documents such as XML files. For example, the one or more data tables may comprise any information that may be utilized by a software and/or hardware module and/or a user of the computer system.

The computer system further comprises a backend server (e.g. 640 of FIG. 6) and a gateway (e.g. 620 of FIG. 6). The backend server is operable to receive a data request from a stateless portal application (hereafter referred to as the portal application) via the gateway.

As used herein the term "server" refers to any computerized component (e.g. a software component), system or entity regardless of form that is adapted to provide data, files, applications, content, or other services to one or more other devices or entities.

The portal application may be installed and running on a portal computer device (e.g. such as client 612 or 614 of FIG. 6). When running, the portal application may display a graphical user interface (e.g. user interface 700 of FIG. 7) on a display of the portal computer device. The portal computer device may comprise for example a mobile telecommunication device. The mobile telecommunication device may comprise a smartphone, a PDA, a laptop, a personal computer, or a notebook computer etc.

For example, each data request (e.g. triggered by a scrolling operation or clicking on user interface element of the graphical user interface) at the portal application using the graphical user interface may open a connection to the gateway, as the data are stored in the cache or the database.

The portal application may comprise a HTML5 web application or a mobile application e.g. for a smartphone.

The term "stateless application" as used herein refers to an application program that does not record data generated in one session - such as information about user settings and data used -- for use in a next session with that user. For example, a "state" may be defined as a set of conditions that exist at a given point in time. A stateless application does not record information about changes in state caused by events during a session e.g. including those caused by user interaction.

For example, the stateless portal application may use a stateless protocol such as an Open Data Protocol (OData) e.g. HTTP. The stateless protocol is a communications protocol that treats each request (e.g. received via the stateless portal application) as an independent transaction that is unrelated to any previous request so that the communication consists of independent pairs of request and one or more responses of the request. A stateless protocol does not require the stateless portal application to retain session information or status about each communications partner for the duration of multiple requests.

The usage of the stateless portal application may be preferable for the sake of scalability and portability in particular in large computing systems such as cloud computing. For example, the usage of the stateless portal application may save resources that would otherwise be required to synchronize session data across multiple servers that run the stateless portal application. The stateless portal application may have a simplified design as there is no need to dynamically allocate storage to deal with data exchange in progress. This may also easy the maintenance of the stateless portal application.

The gateway comprises one or more gateway services associated with respective one or more data entities.

A data entity of the one or more data entities may be defined by one or more properties. The data entity may comprise a data object that may be identified uniquely and for which information is to be stored. The data entity may have or may be classified into an entity type according to the one or more properties.

For example, a gateway service of the one or more gateway service may comprise a user service, wherein the user service may be associated with a data entity being "user data" that may have properties such as user ID or any information relate to a given user etc.

A gateway service of the one or more gateway services comprises (or may be implemented using) a class for accessing properties of a respective data entity. For example, each gateway service of at least part of the one or more gateway services comprises a class for accessing properties of a respective data entity.

For example, the gateway service of the one or more gateway services may be implemented by creating ABAP classes such as Model Provider class and Runtime Data Provider class. A class may comprise a set of instructions for building an object. The one or more properties may be represented as internal data fields within the one or more classes that have been used for (implementing or defining) the gateway service.

The backend server comprises one or more data objects. A data object of the one or more data objects has attributes that are defined by one or more fields of the one or more data tables.

For example, a data object of the one or more data objects may be represented as a hierarchical tree of nodes. Each node may be implemented with a Dictionary table, where each node instance corresponds to a single table row of the one or more data tables. Nodes and attributes set up a data part of a data object. Attributes may form columns or fields of the one or more data tables.

For example, the portal application may communicate with the gateway using a first communication protocol such as the OData protocol. The backend server may communicate with the gateway using a second communication protocol such as for example a TCP protocol (or ODBC). The gateway may be configured to convert a format of data transmitted by one protocol of the first and second communication protocols to another format to be transmitted using the other protocol of the first and second communication protocols.

"OData," as used herein, may refer to the Open Data Protocol, an open web protocol for querying and communicating data using Representational State Transfer (REST) web services.

In step 1201, a cache may be provided in the computer system for storing requested data of the database in the cache. For example, as soon as a dataset is requested from the database it may then be stored in the cache if the requested dataset is not stored in the cache. The cache, for example, may or may not be part of the backend server.

The term "cache" as used herein refers to a temporary storage area that is a high-speed access area and may be either a memory cache or a disk cache. The cache may be, for example, a portion on memory of high-speed static RAM (SRAM) or may be part of main memory e.g. made up of dynamic RAM (DRAM).

For example, the cache may be refreshed on a periodic basis e.g. every day. In another example, the cache may be refreshed upon receiving at the gateway a refresh request from the portal application. The refreshing may comprise deleting or clearing content of the cache the steps 1201-1219 may be repeated so as to (automatically) copy in the cache data from the database as soon as this data is requested from the portal application.

In step 1203, the data request may be received at the gateway from the portal application, for accessing a dataset stored in the database.

For example, the graphical user interface may receive selections, wherein the data request may be triggered by a reception of a selection of a user interface element of the graphical user interface.

The requested dataset may comprise information on a given data entity of the one or more data entities that is represented by the user interface element being selected. In other terms the dataset is indicative of the data entity.

Before receiving the data request from the portal application, at least one first connection may be established between the portal application and the gateway. The data request may be received via the first connection. The first connection to the gateway may be established using an OData channel. The OData Channel may refer to a channel of communications using OData, provided to connect with the gateway.

The data request may be generated or created at the portal application using, for example, HTTP methods such as GET, POST, PUT, and DELETE. Such HTTP methods may be used as RESTful web service communications by the OData protocol.

In step 1205, at least one gateway service from the one or more gateway services having at least part of the properties of the data entity may be selected. The selection may automatically be performed as soon as the data request is received.

In step 1207, at least one data object of the one or more data objects whose attributes match the at least part of properties of the selected gateway service may be selected. The selecting may comprise sending a request by the gateway to the backend server for data objects that have attributes that correspond to the at least part of the properties. The request may indicate the at least part of the properties. The selecting may further comprise receiving a data indicative of the at least one data object.

In step 1209, a data entity instance may be created from the class of the gateway service and the selected data object.

For example, the class may comprise an indication of the selected object. The creation of the data entity instance may comprise instantiating the class of the gateway service.

In one example, the backend server may be controlled e.g. by the gateway to notify the data entity instance about a change in the dataset stored in the database such that the data entity instance may be used (e.g. by the gateway) to update the dataset in the cache upon receiving the notification. In this way, the cache may be synchronized with the content of the database. This may result in that the cache may not need to be refreshed if it is automatically kept up-to-date.

In step 1211, search terms may be extracted from the data request to a format interpretable or recognizable by the database. For example, the extraction may comprise a conversion of HTTP methods such as GET, POST, PUT, and DELETE that have been used in the data request by other e.g. SQL selection methods.

In response to a determination, in step 1213, that the dataset is not stored in the cache, the data entity instance may retrieve in step 1213B data indicative of the dataset from the database using the search terms and in parallel may store the dataset in the cache. For example, before step 1213B the range of the connection may be extended in step 1213A to reach the database or in another example, the data entity instance may retrieve the data indicative of the dataset using a pre-established connection e.g. using a serial bus or another connection means for retrieving the data from the database by the data entity instance.

For example, determining that the dataset is not stored in the cache may comprise sending a check request to the backend server for checking whether the dataset is stored in the cache and receiving a response from the backend server indicating that the dataset is not stored in the cache.

In another example, the determining that the dataset is not stored in the cache may be performed at the gateway by assigning an access count flag to the dataset (and other datasets stored in the database), wherein the access count flag indicates an access count that is incremented as soon as the dataset is accessed. If the access count flag indicates that the access count of the dataset is smaller than one then this is an indication that the dataset is not stored in the cache since it has not been accessed before.

The connection may be extended by, for example, establishing an additional connection or communication channel between the gateway and the database.

In 1213B, the data indicative of the dataset may be retrieved using predefined keys that are used by the backend server to access data stored in the database, wherein a key may comprise a set of instructions for accessing a given dataset. In another example, the key may comprise a single technical identifier for one dataset instance of the dataset.

In step 1215, using the search terms data indicative of the dataset may be retrieved from the cache using the data entity instance if the dataset is stored in the cache.

The retrieving of the data indicative of the data set may be performed after searching the cache (or the database) using the search terms. The search may be performed as a fuzzy search, where all of the data in the cache (only in the cache) is searched for a match to the search terms. For example, if "energy" is an extracted search term from a query, the search may return data or documents containing "energy" somewhere e.g. as a field of a data table of the one or more data tables or within data documents, including data referring to "Energy Consumption", "Energy/Time" etc.

In step 1217, the data indicative of the dataset may be returned to the portal application via the connection and the connection may (e.g. automatically) be closed upon (or immediately after) the returning of the data indicative of the dataset to the portal application.

The data indicative of the dataset may comprise, for example, a count of records of the dataset (e.g. such as records or rows of data shown in FIG.7 that comprise 1230000555, 1230000654 etc.) and/or the dataset (e.g. the dataset is in tabular form). For example, the count of records of the dataset may be returned in a first response and the dataset may be returned in a second response. For example, the first and second responses may be transmitted in one connection of the at least one connection or may be transmitted in respective connections of the at least one connection.

For example, the returning of the dataset may depend on a display format of the graphical user interface. For example, the gateway may control the portal application (e.g. by sending a count request) to provide the number of display pages that would be required for displaying the dataset on the graphical user interface and in which order, records of the dataset would be displayed on the graphical user interface.

The number of display pages may be determined using the count of records and/or user inputs at the portal application. If it is determined that the graphical user interface may display the counted records on multiple display pages, the gateway may split the dataset into data portions corresponding to respective display pages.

For example, the dataset may comprise 100 records (e.g. r1, r2...r100) and a display page of the graphical user interface can display a maximum number of 10 records, the order may be predefined (or randomly chosen) so as, for example, to display r1-r10 in the first display page, r11-r20 in the second display page and so on. In another example, the content of each display page of the multiple display pages may be dynamically determined e.g. using user inputs such as a scroll operation on the graphical user interface. For example, after displaying the first display page which contains records r1-r10 a scroll operation on the graphical user interface may result in a second display page which contains r2-r11. The scroll operation may trigger a data request for the data that corresponds or has content of the records r2-r11.

The data request may indicate records to be displayed on a given display page (e.g., r1-r10 or r2-r11) and/or the order in which they may be displayed on the given display page. For example, if a first data request indicates records r1-r10 and that the order is an ascending order from r1 to r10, then all records may be ordered such that they are stored as r1 to r100 in the cache. And, in case of a second following data request indicating records r11-r20 that would also be ordered in the same ascending order there may be no need to sort separately the records r11-r20 as they are already sorted with the first data request.

In another example, if it is determined that the graphical user interface may display the counted records on multiple display pages, the gateway may provide a first portion of the dataset that corresponds to a first display page of the multiple display pages that is being displayed on the graphical user interface. The gateway may receive in response to sending the count of records to the portal application an indication of the records to be displayed on the first display page and the gateway may determine the first portion of the dataset using the indication of the number of records. In another example, the gateway may comprise a data indicative of the display size of a display of the portal computer device and the gateway may use the display size and a predefined order for displaying the records of the dataset (e.g. r1-r100) to determine the number of records to be displayed and the first portion of the dataset.

The term "display page" as used herein refers to a portion of the graphical user interface to be displayed on display means e.g. of the portal computer device, in a manner perceivable or visible by a user e.g. without using scrolling function of the graphical user interface.

A data portion comprises data of part of the dataset to be displayed on a given display page at the portal application and excluding data that is sent before closing the connection and that would be displayed on the given display page. The gateway may then send the dataset data portion by data portion based on the page being displayed on the portal application. For example, if a first display page is being displayed on the graphical user interface, data portion that corresponds to the first display page may be sent. A next data portion may be sent a soon as a new display page is used (e.g. as following the first display page) changed on the graphical user interface.

For example, the returning of the dataset to the portal application may be based on an order criterion that defines in which order the data retuned to the portal application are displayed e.g. in which display page of the graphical user interface. The order criterion may be indicated in the data request. For example, if a data portion from the middle of the display pages of the graphical user interface (e.g. page 15 of 234 pages) is requested, only the data related to the 15th page are returned, so that the next requested data page (e.g. page 16) continues where the previous one ended.

For example a display page of the graphical user interface is of size 3 (i.e. can only display vertically three elements or rows of elements or records). And the cache stores a dataset in the following order: A, b, c, d, e, f, g, h, l The order criterion may be descending (in this example there is one property per entity; if there are more than one property, the order could be defined per property ascending or descending...). The requester is expecting to get the data like this: Page 1: l, h, g; Page 2: f, e, d and Page 3: c, b, A. This may be advantageous compared to the case where the sorting is performed separately for each content of a page such as to obtain in Page 1: c, b, A , Page 2: f, e, d and Page 3: i, h, g. This may have the advantage of saving resources that would otherwise be required to reorder every page at the portal application.

In step 1219, the dataset may be maintained in the database and the cache only. For example, the backend server may be controlled (e.g. by the gateway using control signals) to not delete the dataset from the cache and the database. This may be advantageous as in the existing computer systems as soon as data is returned (e.g. to the portal application) the data source (e.g. the backend server) may delete or clean up its storages e.g. temporal storages from the retuned data.

## Claims

1. A computer implemented method for accessing data stored in a storage system comprised in a computer system (600), the storage system comprising one or more data tables, the computer system (600) further comprising a backend server (640) and a gateway (620), wherein the backend server (640) is operable to receive a data request from a stateless portal application via the gateway, wherein the portal application does not record data generated in one session for use in a next session with a user and does not record information about changes in state caused by events during a session, including those changed by a user interaction, wherein the portal application uses a stateless protocol, the stateless protocol being a communication protocol that treats each request received via the portal application as an independent transaction that is unrelated to any previous request so that the communication consists of independent pairs of requests and one or more responses of the request, wherein the portal application has a graphical user interface with a paging format for displaying a dataset stored in the storage system and for receiving the dataset in accordance with the paging format, wherein a scroll operation of a user triggers the data request, the gateway (620) comprising one or more gateway services associated with respective one or more data entities, wherein a data entity is defined by one or more properties, wherein a gateway service of the one or more gateway services comprises a class for accessing properties of a respective data entity, wherein the backend server (640) comprises one or more data objects, wherein a data object of the one or more data objects has attributes that are defined by one or more fields of the one or more data tables, the method comprising:
- providing a cache in the computer system (600) for storing requested data of the storage system in the cache;
- receiving at the gateway (620) the data request from the portal application, for accessing the dataset, wherein the dataset is indicative of a data entity of the one or more data entities, the data request being received via at least one connection between the portal application and the gateway;
- selecting at least one gateway service from the one or more gateway services having at least part of the properties of the data entity;
- selecting at least one data object of the one or more data objects whose attributes match the at least part of properties of the selected gateway service;
- creating a data entity instance from the class of the gateway service and the selected data object;
- extracting search terms from the data request to a format interpretable by the storage system and the cache;
- in response to a determination that the dataset is not stored in the cache
∘ retrieving by the data entity instance data indicative of the dataset from the storage system using the search terms and in parallel storing the dataset in the cache;
- retrieving using the search terms data indicative of the dataset from the cache using the data entity instance if the dataset is stored in the cache;
- returning the data indicative of the dataset to the portal application via the connection and closing the connection, wherein the dataset comprises at least one data table having multiple records, wherein returning the data indicative of the dataset to the portal application comprises:
∘ returning in a first response a count of records of the dataset, wherein returning the count of the records further comprises before returning the dataset controlling based on the count a display function of the portal application for determining the paging format of the graphical user interface;
∘ upon returning the first response receiving from the portal application a second data request, wherein the second data request indicates a first set of records of the multiple records and a predefined sorting criterion for sorting the first set of records;
∘ returning in a second response at least part of the dataset, wherein returning the data indicative of the dataset comprises: sorting the multiple data records according to the sorting criterion, whereby the sorting is performed in the cache, and retuning the first set of records as sorted, wherein the first set of records comprises a first maximum number of records that can be displayed on a single first display page of the graphical user interface; wherein the first and second responses are transmitted in respective connections of the at least one connection; after returning the data indicative of the dataset receiving a third data request using another connection between the portal application and the gateway for accessing the dataset, wherein the third data request indicates a second set of records of the multiple records and the sorting criterion, retrieving the second set of records as sorted according to the sorting criterion from the cache, returning the second set of records as sorted, wherein the second set of records is ordered in the same order as the first set of records without performing an additional sorting, wherein the second set of records comprises a second maximum number of records that can be displayed on a single second display page of the graphical user interface;
maintaining the dataset in the storage system and the cache only.

2. The method of claim 1, further comprising:
- controlling the backend server to notify the data entity instance about a change in the dataset stored in the storage system;
- using the data entity instance to update the dataset In the cache upon receiving the notification.

3. The method of claim 1, wherein returning the dataset to the portal application comprises:
- splitting the dataset into one or more data portions corresponding to respective one or more display pages of the paging format, wherein a data portion comprises data of part of the dataset to be displayed on a display page at the portal application;
- sending the dataset data portion by data portion based on the page being displayed on the portal application.

4. The method of any of the preceding claims, wherein the cache comprises a cluster table including buckets, wherein a bucket is defined by a maximum number of bytes it contains, the cluster table including: a client field representing a client with which data in a bucket of the cluster table is associated; a region identifier identifying at least one region in the cluster table that is readable or writable; a user identifier identifying a user with whom the cluster table is associated; an entity field identifying a middleware entity used to determine a structure of the data in the cluster table; a record counter for the at least one readable or writable region of the cluster table; a timestamp recording events; a line identifier identifying the size of the cluster table; a status identifier indicating an availability of the cache; and a cluster identifier identifying a length field for user data in the at least one readable or writable region.

5. The method of any of the preceding claims, wherein the structure of the cache is determined by the data entity instance using the properties of the data entity.

6. The method of any of the preceding claims, further comprising refreshing the cache automatically or upon receiving a refresh request from the portal application,

7. The method of any of the preceding claims, wherein the retrieving comprises searching the cache using a fuzzy search.

8. A computer program product comprising computer executable instructions to perform the method steps of the method of any one of the preceding claims.

9. A gateway for accessing data stored in a storage system comprised in a computer system, the storage system comprising one or more data tables, the computer system further comprising a backend server, wherein the backend server is operable to receive a data request from a stateless portal application via the gateway, wherein the portal application does not record data generated in one session for use in a next session with a user and does not record information about changes in state caused by events during a session, including those changed by a user interaction, wherein the portal application uses a stateless protocol, the stateless protocol being a communication protocol that treats each request received via the portal application as an independent transaction that is unrelated to any previous request so that the communication consists of independent pairs of requests and one or more responses of the request, wherein the portal application has a graphical user interface with a paging format for displaying a dataset stored in the storage system and for receiving the dataset in accordance with the paging format, wherein a scroll operation of a user triggers the data request, the gateway comprising one or more gateway services associated with respective one or more data entities, wherein a data entity is defined by one or more properties, wherein a gateway service of the one or more gateway services comprises a class for accessing properties of a respective data entity, wherein the backend server comprises one or more data objects, wherein a data object of the one or more data objects has attributes that are defined by one or more fields of the one or more data tables, the computer system further comprising the method comprising a cache for storing requested data of the storage system in the cache, the gateway being configured for
- receiving the data request from the portal application, for accessing the dataset, wherein the dataset is indicative of a data entity of the one or more data entities, the data request being received via at least one connection between the portal application and the gateway;
- selecting at least one gateway service from the one or more gateway services having at least part of the properties of the data entity;
- selecting at least one data object of the one or more data objects whose attributes match the at least part of properties of the selected gateway service;
- creating a data entity instance from the class of the gateway service and the selected data object;
- extracting search terms from the data request to a format interpretable by the storage system and the cache;
- in response to a determination that the dataset is not stored in the cache
∘ retrieving by the data entity instance data indicative of the dataset from the storage system using the search terms and storing the dataset in the cache;
- retrieving using the search terms data indicative of the dataset from the cache using the data entity instance if the dataset is stored in the cache;
- returning the data indicative of the dataset to the portal application via the connection and closing the connection; wherein the dataset comprises at least one data table having multiple records, wherein returning the data indicative of the dataset to the portal application comprises:
∘ returning in a first response a count of records of the dataset, wherein returning the count of the records further comprises before returning the dataset controlling based on the count a display function of the portal application for determining the paging format of the graphical user interface;
∘ upon returning the first response receiving from the portal application a second data request, wherein the second data request indicates a first set of records of the multiple records and a predefined sorting criterion for sorting the first set of records;
∘ returning in a second response at least part of the dataset, wherein returning the data indicative of the dataset comprises: sorting the multiple data records according to the sorting criterion whereby the sorting is performed in the cache, and retuning the first set of records as sorted, wherein the first set of records comprises a first maximum number of records that can be displayed on a single first display page of the graphical user interface; wherein the first and second responses are transmitted in respective connections of the at least one connection; after returning the data indicative of the dataset receiving a third data request using another connection between the portal application and the gateway for accessing the dataset, wherein the third data request indicates a second set of records of the multiple records and the sorting criterion, retrieving the second set of records as sorted according to the sorting criterion from the cache, returning the second set of records as sorted, wherein the second set of records is ordered in the same order as the first set of records without performing an additional sorting, wherein the second set of records comprises a second maximum number of records that can be displayed on a single second display page of the graphical user interface;
- maintaining the dataset in the storage system and the cache only.

## Patentansprüche

1. Computerimplementiertes Verfahren zum Zugreifen auf Daten, die in einem Speichersystem gespeichert werden, das in einem Computersystem (600) enthalten ist, wobei das Speichersystem ein oder mehr Datentabellen aufweist, wobei das Computersystem (600) ferner einen Backend-Server (640) und ein Gateway (620) aufweist, wobei der Backend-Server (640) zum Empfangen einer Datenanforderung von einer zustandslosen Portalanwendung über das Gateway funktionell ist, wobei die Portalanwendung keine in einer Sitzung generierte Daten zur Verwendung in einer nächsten Sendung mit einem Benutzer aufzeichnet und keine Informationen über Zustandsänderungen, die durch Ereignisse während einer Sitzung veranlasst werden, einschließlich denen, die durch eine Benutzerinteraktion geändert werden, aufzeichnet, wobei die Portalanwendung ein zustandsloses Protokoll verwendet, wobei das zustandslose Protokoll ein Kommunikationsprotokoll ist, das jede über die Portalanwendung empfangene Anforderung als eine unabhängige Transaktion behandelt, die in keinem Bezug zu irgendeiner vorherigen Anforderung steht, so dass die Kommunikation aus unabhängigen Paaren von Anforderungen und ein oder mehr Antworten auf die Anforderung besteht, wobei die Portalanwendung eine grafische Benutzeroberfläche mit einem Paging-Format zum Anzeigen eines in dem Speichersystem gespeicherten Datenbestands und zum Empfangen des Datenbestands gemäß dem Paging-Format hat, wobei ein Scroll-Vorgang eines Benutzers die Datenanforderung auslöst, wobei das Gateway (620) ein oder mehr Gateway-Dienste aufweist, die jeweils ein oder mehr Datenentitäten zugeordnet sind, wobei eine Datenentität von ein oder mehr Eigenschaften definiert wird, wobei ein Gateway-Dienst der ein oder mehr Gateway-Dienste eine Klasse für Zugriff auf Eigenschaften einer jeweiligen Datenentität aufweist, wobei der Backend-Server (640) ein oder mehr Datenobjekte aufweist, wobei ein Datenobjekt der ein oder mehr Datenobjekte Attribute hat, die von ein oder mehr Feldern der ein oder mehr Datentabellen definiert werden, wobei das Verfahren Folgendes aufweist:
- Bereitstellen eines Caches im Computersystem (600) zum Speichern angeforderter Daten des Speichersystems im Cache;
- am Gateway (620) Empfangen der Datenanforderung von der Portalanwendung für Zugriff auf den Datenbestand, wobei der Datenbestand für eine Datenentität der ein oder mehr Datenentitäten bezeichnend ist, wobei die Datenanforderung über wenigstens eine Verbindung zwischen der Portalanwendung und dem Gateway empfangen wird;
- Auswählen wenigstens eines Gateway-Dienstes aus den ein oder mehr Gateway-Diensten, die wenigstens ein Teil der Eigenschaften der Datenentität haben;
- Auswählen wenigstens eines Datenobjekts der ein oder mehr Datenobjekte, dessen Attribute mit dem wenigstens einen Teil der Eigenschaften des ausgewählten Gateway-Dienstes übereinstimmen;
- Erzeugen einer Datenentitätsinstanz aus der Klasse des Gateway-Dienstes und des ausgewählten Datenobjekts;
- Extrahieren von Suchbegriffen aus der Datenanforderung in ein Format, das durch das Speichersystem und den Cache interpretierbar ist;
- als Reaktion auf eine Ermittlung, dass der Datenbestand nicht im Cache gespeichert wird:
∘ durch die Datenentitätsinstanz Abrufen von Daten, die für den Datenbestand bezeichnend sind, aus dem Speichersystem unter Verwendung der Suchbegriffe und paralleles Speichern des Datenbestands im Cache;
- unter Verwendung der Suchbegriffe Abrufen von Daten, die für den Datenbestand bezeichnend sind, aus dem Cache unter Verwendung der Datenentitätsinstanz, falls der Datenbestand im Cache gespeichert wird;
- Zurückgeben der Daten, die für den Datenbestand bezeichnend sind, an die Portalanwendung über die Verbindung und Schließen der Verbindung, wobei der Datenbestand wenigstens eine Datentabelle mit vielen Einträgen aufweist, wobei das Zurückgeben der Daten, die für den Datenbestand bezeichnend sind, an die Portalanwendung Folgendes aufweist:
∘ in einer ersten Antwort Zurückgeben einer Zählung von Einträgen des Datenbestands, wobei das Zurückgeben der Zählung der Einträge ferner vor dem Zurückgeben des Datenbestands auf der Zählung basierendes Steuern einer Anzeigefunktion der Portalanwendung zum Ermitteln des Paging-Formats der grafischen Benutzeroberfläche aufweist;
∘ bei Zurückgeben der ersten Anwort Empfangen einer zweiten Datenanforderung von der Portalanwendung, wobei die zweite Datenanforderung einen ersten Eintragsbestand der vielen Einträge und ein vordefiniertes Sortierkriterium zum Sortieren des ersten Eintragsbestands angibt;
∘ in einer zweiten Antwort Zurückgeben wenigstens eines Teils des Datenbestands, wobei das Zurückgeben der Daten, die den Datenbestand bezeichnen, Folgendes aufweist: Sortieren der vielen Dateneinträge gemäß dem Sortierkriterium, bei dem das Sortieren im Cache durchgeführt wird, und Zurückgeben des sortierten ersten Eintragsbestands, wobei der erste Eintragsbestand eine erste maximale Anzahl von Einträgen, die auf einer einzelnen ersten Anzeigeseite der grafischen Benutzeroberfläche angezeigt werden können, aufweist; wobei die erste und die zweite Antwort in jeweiligen Verbindungen der wenigstens einen Verbindung übertragen werden; nach dem Zurückgeben der Daten, die für den Datenbestand bezeichnend sind, Empfangen einer dritten Datenanforderung unter Verwendung einer anderen Verbindung zwischen der Portalanwendung und dem Gateway für Zugriff auf den Datenbestand, wobei die dritte Datenanforderung einen zweiten Eintragsbestand der vielen Einträge und das Sortierkriterium angibt, Abrufen des sortierten zweiten Eintragsbestands gemäß dem Sortierkriterium aus dem Cache, Zurückgeben des sortierten zweiten Eintragsbestands, wobei der zweite Eintragsbestand in der gleichen Reihenfolge wie der erste Eintragsbestand ohne Durchführen einer zusätzlichen Sortierung geordnet wird, wobei der zweite Eintragsbestand eine zweite maximale Anzahl von Einträgen, die auf einer einzelnen zweiten Anzeigeseite der grafischen Benutzeroberfläche angezeigt werden können, aufweist;
Pflegen des Datenbestands nur im Speichersystem und im Cache.

2. Verfahren nach Anspruch 1, das ferner Folgendes aufweist:
- Steuern des Backend-Servers zur Benachrichtigung der Datenentitätsinstanz über eine Änderung in dem im Speichersystem gespeicherten Datenbestand;
- Verwenden der Datenentitätsinstanz zum Aktualisieren des Datenbestands im Cache bei Empfang der Benachrichtigung.

3. Verfahren nach Anspruch 1, wobei das Zurückgeben des Datensatzes an die Portalanwendung Folgendes aufweist:
- Teilen des Datenbestands in ein oder mehr Datenportionen, die jeweiligen ein oder mehr Anzeigeseiten des Paging-Formats entsprechen, wobei eine Datenportion Daten von Teil des Datenbestands aufweist, das auf einer Anzeigeseite an der Portalanwendung angezeigt werden soll;
- Senden des Datenbestands Datenportion um Datenportion auf Basis der auf der Portalanwendung angezeigten Seite.

4. Verfahren nach einem der vorhergehenden Ansprüche, wobei der Cache eine Cluster-Tabelle mit Buckets aufweist, wobei ein Bucket durch eine maximale Anzahl von Bytes, die er enthält, definiert wird, wobei die Cluster-Tabelle Folgendes aufweist: ein Client-Feld, das einen Client repräsentiert, dem Daten in einem Bucket der Cluster-Tabelle zugeordnet sind; eine Regionskennung, die wenigstens eine Region in der Cluster-Tabelle kennzeichnet, die lesbar oder beschreibbar ist; eine Benutzerkennung, die einen Benutzer kennzeichnet, dem die Cluster-Tabelle zugeordnet ist; ein Entitätsfeld, das eine Middleware-Entität kennzeichnet, die zum Ermitteln einer Struktur der Daten in der Cluster-Tabelle verwendet wird; einen Eintragszähler für die wenigstens eine lesbare oder beschreibbare Region der Cluster-Tabelle; einen Ereignisse aufzeichnenden Zeitstempel; eine Zeilenkennung, die die Größe der Cluster-Tabelle kennzeichnet; eine Statuskennung, die eine Verfügbarkeit des Caches angibt; und eine Cluster-Kennung, die Längenfeld für Benutzerdaten in der wenigstens einen lesbaren und beschreibbaren Region kennzeichnet.

5. Verfahren nach einem der vorhergehenden Ansprüche, wobei die Struktur des Caches durch die Datenentitätsinstanz unter Verwendung der Eigenschaften der Datenentität ermittelt wird.

6. Verfahren nach einem der vorhergehenden Ansprüche, das ferner das Auffrischen des Caches, entweder automatisch oder bei Empfang einer Auffrischungsanforderung von der Portalanwendung, aufweist.

7. Verfahren nach einem der vorhergehenden Ansprüche, wobei das Abrufen das Durchsuchen des Caches unter Verwendung einer Fuzzy-Suche aufweist.

8. Computerprogrammprodukt, das computerausführbare Anweisungen zum Durchführen der Verfahrensschritte des Verfahrens nach einem der vorhergehenden Ansprüche aufweist.

9. Gateway zum Zugreifen auf Daten, die in einem Speichersystem gespeichert werden, das in einem Computersystem enthalten ist, wobei das Speichersystem ein oder mehr Datentabellen aufweist, wobei das Computersystem ferner einen Backend-Server aufweist, wobei der Backend-Server zum Empfangen einer Datenanforderung von einer zustandslosen Portalanwendung über das Gateway funktionell ist, wobei die Portalanwendung keine in einer Sitzung generierte Daten zur Verwendung in einer nächsten Sendung mit einem Benutzer aufzeichnet und keine Informationen über Zustandsänderungen, die durch Ereignisse während einer Sitzung veranlasst werden, einschließlich denen, die durch eine Benutzerinteraktion geändert werden, aufzeichnet, wobei die Portalanwendung ein zustandsloses Protokoll verwendet, wobei das zustandslose Protokoll ein Kommunikationsprotokoll ist, das jede über die Portalanwendung empfangene Anforderung als eine unabhängige Transaktion behandelt, die in keinem Bezug zu irgendeiner vorherigen Anforderung steht, so dass die Kommunikation aus unabhängigen Paaren von Anforderungen und ein oder mehr Antworten auf die Anforderung besteht, wobei die Portalanwendung eine grafische Benutzeroberfläche mit einem Paging-Format zum Anzeigen eines in dem Speichersystem gespeicherten Datenbestands und zum Empfangen des Datenbestands gemäß dem Paging-Format hat, wobei ein Scroll-Vorgang eines Benutzers die Datenanforderung auslöst, wobei das Gateway ein oder mehr Gateway-Dienste aufweist, die jeweils ein oder mehr Datenentitäten zugeordnet sind, wobei eine Datenentität von ein oder mehr Eigenschaften definiert wird, wobei ein Gateway-Dienst der ein oder mehr Gateway-Dienste eine Klasse für Zugriff auf Eigenschaften einer jeweiligen Datenentität aufweist, wobei der Backend-Server ein oder mehr Datenobjekte aufweist, wobei ein Datenobjekt der ein oder mehr Datenobjekte Attribute hat, die von ein oder mehr Feldern der ein oder mehr Datentabellen definiert werden, wobei das Computersystem ferner das Verfahren aufweist, das einen Cache zum Speichern angeforderter Daten des Speichersystems im Cache aufweist, wobei das Gateway konfiguriert ist zum
- Empfangen der Datenanforderung von der Portalanwendung für Zugriff auf den Datenbestand, wobei der Datenbestand für eine Datenentität der ein oder mehr Datenentitäten bezeichnend ist, wobei die Datenanforderung über wenigstens eine Verbindung zwischen der Portalanwendung und dem Gateway empfangen wird;
- Auswählen wenigstens eines Gateway-Dienstes aus den ein oder mehr Gateway-Diensten, die wenigstens ein Teil der Eigenschaften der Datenentität haben;
- Auswählen wenigstens eines Datenobjekts der ein oder mehr Datenobjekte, dessen Attribute mit dem wenigstens einen Teil der Eigenschaften des ausgewählten Gateway-Dienstes übereinstimmen;
- Erzeugen einer Datenentitätsinstanz aus der Klasse des Gateway-Dienstes und des ausgewählten Datenobjekts;
- Extrahieren von Suchbegriffen aus der Datenanforderung in ein Format, das durch das Speichersystem und den Cache interpretierbar ist;
- als Reaktion auf eine Ermittlung, dass der Datenbestand nicht im Cache gespeichert wird:
∘ durch die Datenentitätsinstanz Abrufen von Daten, die für den Datenbestand bezeichnend sind, aus dem Speichersystem unter Verwendung der Suchbegriffe und Speichern des Datenbestands im Cache;
- unter Verwendung der Suchbegriffe Abrufen von Daten, die für den Datenbestand bezeichnend sind, aus dem Cache unter Verwendung der Datenentitätsinstanz, falls der Datenbestand im Cache gespeichert wird;
- Zurückgeben der Daten, die für den Datenbestand bezeichnend sind, an die Portalanwendung über die Verbindung und Schließen der Verbindung, wobei der Datenbestand wenigstens eine Datentabelle mit vielen Einträgen aufweist, wobei das Zurückgeben der Daten, die für den Datenbestand bezeichnend sind, an die Portalanwendung Folgendes aufweist:
∘ in einer ersten Antwort Zurückgeben einer Zählung von Einträgen des Datenbestands, wobei das Zurückgeben der Zählung der Einträge ferner vor dem Zurückgeben des Datenbestands auf der Zählung basierendes Steuern einer Anzeigefunktion der Portalanwendung zum Ermitteln des Paging-Formats der grafischen Benutzeroberfläche aufweist;
∘ bei Zurückgeben der ersten Anwort Empfangen einer zweiten Datenanforderung von der Portalanwendung, wobei die zweite Datenanforderung einen ersten Eintragsbestand der vielen Einträge und ein vordefiniertes Sortierkriterium zum Sortieren des ersten Eintragsbestands angibt;
∘ in einer zweiten Antwort Zurückgeben wenigstens eines Teils des Datenbestands, wobei das Zurückgeben der Daten, die den Datenbestand bezeichnen, Folgendes aufweist: Sortieren der vielen Dateneinträge gemäß dem Sortierkriterium, bei dem das Sortieren im Cache durchgeführt wird, und Zurückgeben des sortierten ersten Eintragsbestands, wobei der erste Eintragsbestand eine erste maximale Anzahl von Einträgen, die auf einer einzelnen ersten Anzeigeseite der grafischen Benutzeroberfläche angezeigt werden können, aufweist; wobei die erste und die zweite Antwort in jeweiligen Verbindungen der wenigstens einen Verbindung übertragen werden; nach dem Zurückgeben der Daten, die für den Datenbestand bezeichnend sind, Empfangen einer dritten Datenanforderung unter Verwendung einer anderen Verbindung zwischen der Portalanwendung und dem Gateway für Zugriff auf den Datenbestand, wobei die dritte Datenanforderung einen zweiten Eintragsbestand der vielen Einträge und das Sortierkriterium angibt, Abrufen des sortierten zweiten Eintragsbestands gemäß dem Sortierkriterium aus dem Cache, Zurückgeben des sortierten zweiten Eintragsbestands, wobei der zweite Eintragsbestand in der gleichen Reihenfolge wie der erste Eintragsbestand ohne Durchführen einer zusätzlichen Sortierung geordnet wird, wobei der zweite Eintragsbestand eine zweite maximale Anzahl von Einträgen, die auf einer einzelnen zweiten Anzeigeseite der grafischen Benutzeroberfläche angezeigt werden können, aufweist;
- Pflegen des Datenbestands nur im Speichersystem und im Cache.

## Revendications

1. Procédé mis en oeuvre par ordinateur pour accéder à des données stockées dans un système de stockage compris dans un système informatique (600), le système de stockage comprenant un ou plusieurs tableaux de données, le système informatique (600) comprenant en outre un serveur principal (640) et une passerelle (620), où le serveur principal (640) permet de recevoir une requête pour une donnée à partir d'une application de portail sans état par le biais de la passerelle, où l'application de portail n'enregistre pas des données générées dans une session pour une utilisation dans une prochaine session avec un utilisateur et n'enregistre pas d'information concernant des changements dans un état causé par des événements durant une session, y compris celle changée par une interaction d'utilisateur, où l'application de portail utilise un protocole sans état, le protocole sans état étant un protocole de communication qui considère chaque requête reçue par le biais de l'application de portail en tant que transaction indépendante qui n'est pas reliée à une quelconque requête précédente de sorte que la communication consiste en paires indépendantes de requêtes et en une ou plusieurs réponses à la requête, où l'application de portail a une interface d'utilisateur graphique avec un format de pagination pour afficher un ensemble de données stocké dans le système de stockage et pour recevoir l'ensemble de données en fonction du format de pagination, où une opération de déroulement d'un utilisateur déclenche la requête pour la donnée, la passerelle (620) comprenant un ou plusieurs services de passerelle associés avec une ou plusieurs entités de donnée respectives, où une entité de donnée est définie par une ou plusieurs propriétés, où un service de passerelle parmi le ou les services de passerelle comprend une classe pour accéder à des propriétés d'une entité de donnée respective, où le serveur principal (640) comprend un ou plusieurs objets de données, où un objet de donnée parmi l'objet ou les objets de donnée a des attributs qui sont définis par un ou plusieurs champs du ou des tableaux de données, le procédé comprenant :
- la mise en place d'un cache dans le système informatique (600) pour stocker les données demandées dans le système de stockage dans le cache ;
- la réception, au niveau de la passerelle (620), de la requête pour les données provenant de l'application de portail, pour accéder à l'ensemble de données, où l'ensemble de données est indicateur d'une entité de donnée parmi la ou les entités de données, la demande de données étant reçue par le biais d'au moins une connexion entre l'application de portail et la passerelle ;
- la sélection d'au moins un service de passerelle à partir du ou des services de passerelle ayant au moins une partie des propriétés de l'entité de données ;
- la sélection d'au moins un objet de donnée parmi le ou les objets de données dont les attributs correspondent à l'au moins une partie des propriétés du service de passerelle sélectionné ;
- la création d'une instance d'entité de donnée à partir de la classe du service de passerelle et de l'objet de donnée sélectionné ;
- l'extraction de termes de recherche à partir de la requête pour les données vers un format interprétable par le système de stockage et le cache ;
- en réponse à une détermination que l'ensemble de données n'est pas stocké dans le cache
∘ la récupération, par l'instance d'entités de données, de données indicatrices de l'ensemble de données à partir du système de stockage en utilisant les termes de recherche et en stockant en parallèle l'ensemble de données dans le cache ;
- la récupération de l'utilisation des données de termes de recherche indicatrices de l'ensemble de données à partir du cache en utilisant l'instance d'entités de données si l'ensemble de données est stocké dans le cache ;
- le retour de la donnée indicatrice de l'ensemble de données à l'application de portail par le biais de la connexion et de la fermeture de la connexion, où l'ensemble de données comprend au moins un tableau de données ayant de multiples enregistrements, où le retour des données indicatrices de l'ensemble de données à l'application de portail comprend :
∘ le retour dans une première réponse d'un comptage d'enregistrements de l'ensemble de données, où le retour du comptage d'enregistrements comprend en outre, avant le retour de l'ensemble de données, la commande sur la base du comptage d'une fonction d'affichage de l'application de portail pour déterminer le format de pagination de l'interface d'utilisateur graphique ;
∘ lors du retour de la première réponse, la réception, à partir de l'application de portail, d'une deuxième requête pour des données, où la deuxième demande de données indique un premier ensemble d'enregistrements parmi les multiples enregistrements et un critère de sélection prédéfini pour sortir le premier ensemble d'enregistrements ;
∘ le retour dans une deuxième réponse au moins en partie de l'ensemble de données, où le retour de la donnée indicatrice de l'ensemble de données comprend : la sélection des multiples enregistrements de données en fonction du critère de sélection, tandis que la sélection est effectuée dans le cache, et le retour du premier ensemble d'enregistrements tel que sélectionné, où le premier ensemble d'enregistrements comprend un premier nombre maximal d'enregistrements qui peuvent être affichés sur une seule première page d'affichage de l'interface d'utilisateur graphique ; où les première et deuxième réponses sont transmises dans des connexions respectives de l'au moins une connexion ; après le retour de la donnée indicatrice de l'ensemble de données, la réception d'une troisième demande de données en utilisant une autre connexion entre l'application de portail et la passerelle pour accéder à l'ensemble de données, où la troisième demande de données indique un deuxième ensemble d'enregistrements des multiples enregistrements et le critère de sélection, la récupération du deuxième ensemble d'enregistrements tels que sélectionnés en fonction du critère de sélection à partir du cache, le retour du deuxième ensemble d'enregistrements tels que sélectionné, où le deuxième ensemble d'enregistrements est classé dans le même ordre que le premier ensemble d'enregistrements sans effectuer une sélection supplémentaire, où le deuxième ensemble d'enregistrements comprend un deuxième nombre maximal d'enregistrements qui peuvent être affichés sur une seule deuxième page d'affichage de l'interface d'utilisateur graphique ;
le maintien de l'ensemble de données dans le système de stockage et dans le cache uniquement.

2. Procédé selon la revendication 1, comprenant en outre :
- la commande du serveur principal pour qu'il notifie à l'instance d'entités de données un changement dans l'ensemble de données stocké dans le système de stockage ;
- l'utilisation de l'instance d'entités de données pour mettre à jour l'ensemble de données dans le cache lors d'une réception de la notification.

3. Procédé selon la revendication 1, dans lequel le retour de l'ensemble de données vers l'application de portail comprend :
- la division de l'ensemble de données en une ou plusieurs parties de données correspondant à une ou plusieurs pages d'affichage dans le format de pagination respectives, où une partie des données comprend des données d'une partie de l'ensemble de données à afficher sur une page d'affichage au niveau de l'application de portail ;
- l'envoi de l'ensemble de données par parties de données sur la base de la page étant affichée sur l'application de portail.

4. Procédé selon l'une quelconque des revendications précédentes, dans lequel le cache comprend un tableau en grappe incluant des godets, où un godet est défini par un nombre maximal de bouchées qu'il contient, le tableau en grappe incluant : un champ client représentant un client avec lequel des données dans un godet du tableau en grappe sont associés ; un identifieur de région identifiant au moins une région dans le tableau en grappe qui est lisible ou peut être écrite ; un identifieur d'utilisateur identifiant un utilisateur avec lequel le tableau en grappe est associé ; un champ d'entité identifiant une entité d'intergiciel utilisée pour déterminer une structure des données dans le tableau en grappe ; un compteur d'enregistrement pour l'au moins une région du tableau en grappe lisible ou pouvant être écrite ; un horodatage enregistrant les événements ; un identifieur de ligne identifiant la taille du tableau en grappe ; un identifieur d'état indiquant une disponibilité du cache ; et un identifieur de grappe identifiant un champ de longueur pour des données d'utilisateur dans l'au moins une région lisible ou pouvant être écrite.

5. Procédé selon l'une quelconque des revendications précédentes, dans lequel la structure du cache est déterminée par l'instance d'entité de donnée en utilisant les propriétés de l'entité de données.

6. Procédé selon l'une quelconque des revendications précédentes, comprenant en outre un rafraîchissement du cache de manière automatique ou lors d'une réception d'une requête fraîche provenant de l'application de portail.

7. Procédé selon l'une quelconque des revendications précédentes, dans lequel la récupération comprend une recherche du cache en utilisant une recherche approximative.

8. Produit-programme informatique comprenant des instructions exécutables par ordinateur pour exécuter les étapes de procédé du procédé selon l'une quelconque des revendications précédentes.

9. Passerelle pour accéder à des données stockées dans un système de stockage compris dans un système informatique, le système de stockage comprenant un ou plusieurs tableaux de données, le système informatique comprenant en outre un serveur principal, où le serveur principal permet de recevoir une requête pour des données à partir d'une application de portail sans état par le biais de la passerelle, où l'application de portail n'enregistre pas des données générées dans une session pour une utilisation dans une prochaine session avec un utilisateur et n'enregistre pas d'information concernant des changements dans un état causé par des événements durant une session, y compris celles changées par une interaction d'utilisateur, où l'application de portail utilise un protocole sans état, le protocole sans état étant un protocole de communication qui considère chaque requête reçue par le biais de l'application de portail en tant que transaction indépendante qui n'est pas reliée à une quelconque requête précédente de sorte que la communication consiste en paires indépendantes de requêtes et en une ou plusieurs réponses à la requête, où l'application de portail a une interface d'utilisateur graphique avec un format de pagination pour afficher un ensemble de données stocké dans le système de stockage et pour recevoir l'ensemble de données en fonction du format de pagination, où une opération de déroulement d'un utilisateur déclenche la requête pour la donnée, la passerelle comprenant un ou plusieurs services de passerelle associés avec une ou plusieurs entités de donnée respectives, où une entité de donnée est définie par une ou plusieurs propriétés, où un service de passerelle parmi le ou les services de passerelle comprend une classe pour accéder à des propriétés d'une entité de donnée respective, où le serveur principal comprend un ou plusieurs objets de données, où un objet de donnée parmi l'objet ou les objets de donnée a des attributs qui sont définis par un ou plusieurs champs du ou des tableaux de données, le système informatique comprenant en outre le procédé comprenant un cache pour le stockage de données demandées du système de stockage dans le cache, la passerelle étant conçue pour
- recevoir la requête pour les données provenant de l'application de portail, pour accéder à l'ensemble de données, où l'ensemble de données est indicateur d'une entité de données parmi la ou les entités de données, la demande de données étant reçue par le biais d'au moins une connexion entre l'application de portail et la passerelle ;
- sélectionner au moins un service de passerelle à partir du ou des services de passerelle ayant au moins une partie des propriétés de l'entité de données ;
- sélectionner au moins un objet de donnée parmi le ou les objets de données dont les attributs correspondent à l'au moins une partie des propriétés du service de passerelle sélectionné ;
- créer une instance d'entités de données à partir de la classe du service de passerelle et de l'objet de donnée sélectionné ;
- extraire des termes de recherche à partir de la requête pour les données vers un format interprétable par le système de stockage et le cache ;
- en réponse à une détermination que l'ensemble de données n'est pas stocké dans le cache
∘ récupérer par l'instance d'entité de donnée de données indicatrices de l'ensemble de données à partir du système de stockage en utilisant les termes de recherche et en stockant en parallèle l'ensemble de données dans le cache ;
- récupérer l'utilisation des données de termes de recherche indicatrices de l'ensemble de données à partir du cache en utilisant l'instance d'entités de données si l'ensemble de données est stocké dans le cache ;
- retourner la donnée indicatrice de l'ensemble de données à l'application de portail par le biais de la connexion et de la fermeture de la connexion, où l'ensemble de données comprend au moins un tableau de données ayant de multiples enregistrements, où le retour des données indicatrices de l'ensemble de données à l'application de portail comprend :
∘ le retour, dans une première réponse, d'un comptage d'enregistrements de l'ensemble de données, où le retour du comptage d'enregistrements comprend en outre, avant le retour de l'ensemble de données, la commande sur la base du comptage d'une fonction d'affichage de l'application de portail pour déterminer le format de pagination de l'interface d'utilisateur graphique ;
∘ lors du retour de la première réponse, la réception, à partir de l'application de portail, d'une deuxième requête pour des données, où la deuxième demande de données indique un premier ensemble d'enregistrements parmi les multiples enregistrements et un critère de sélection prédéfini pour sortir le premier ensemble d'enregistrements ;
∘ le retour, dans une deuxième réponse, d'au moins une partie de l'ensemble de données, où le retour de la donnée indicatrice de l'ensemble de données comprend : la sélection des multiples enregistrements de données en fonction du critère de sélection, tandis que la sélection est effectuée dans le cache, et le retour du premier ensemble d'enregistrements tel que sélectionné, où le premier ensemble d'enregistrements comprend un premier nombre maximal d'enregistrements qui peuvent être affichés sur une seule première page d'affichage de l'interface d'utilisateur graphique ; où les première et deuxième réponses sont transmises dans des connexions respectives de l'au moins une connexion ; après le retour de la donnée indicatrice de l'ensemble de données, la réception d'une troisième demande de données en utilisant une autre connexion entre l'application de portail et la passerelle pour accéder à l'ensemble de données, où la troisième demande de données indique un deuxième ensemble d'enregistrements des multiples enregistrements et le critère de sélection, la récupération du deuxième ensemble d'enregistrements tels que sélectionnés en fonction du critère de sélection à partir du cache, le retour du deuxième ensemble d'enregistrements tels que sélectionné, où le deuxième ensemble d'enregistrements est classé dans le même ordre que le premier ensemble d'enregistrements sans effectuer une sélection supplémentaire, où le deuxième ensemble d'enregistrements comprend un deuxième nombre maximal d'enregistrements qui peuvent être affichés sur une seule deuxième page d'affichage de l'interface d'utilisateur graphique ;
- maintenir l'ensemble de données dans le système de stockage et dans le cache uniquement.
